(19)

Europäisches
Patentamt
European
Patent Office
Office européen
des brevets

(11) **EP 4 568 135 A1**

(12) **EUROPEAN PATENT APPLICATION**
published in accordance with Art. 153(4) EPC

(43) Date of publication:
**11.06.2025 Bulletin 2025/24**

(21) Application number: **23886224.7**

(22) Date of filing: **31.10.2023**

(51) International Patent Classification (IPC):
*H04B 7/10* (2017.01)    *H04W 74/08* (2024.01)
*H04W 84/06* (2009.01)

(52) Cooperative Patent Classification (CPC):
**H04B 7/10; H04W 72/232; H04W 74/00;**
**H04W 74/08; H04W 84/06**

(86) International application number:
**PCT/KR2023/017155**

(87) International publication number:
**WO 2024/096528 (10.05.2024 Gazette 2024/19)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **31.10.2022  KR 20220142564**

(71) Applicants:
 • **Hyundai Motor Company**
   **Seoul 06797 (KR)**
 • **Kia Corporation**
   **Seoul 06797 (KR)**

 • **INHA University Research and Business**
   **Foundation**
   **Incheon 22212 (KR)**

(72) Inventors:
 • **SUH, Young Kil**
   **Hwaseong-si, Gyeonggi-do 18280 (KR)**
 • **HONG, Ui Hyun**
   **Hwaseong-si, Gyeonggi-do 18280 (KR)**
 • **KIM, Duk Kyung**
   **Seoul 06762 (KR)**

(74) Representative: **Isarpatent**
   **Patent- und Rechtsanwälte**
   **Barth Hassa Peckmann & Partner mbB**
   **Friedrichstraße 31**
   **80801 München (DE)**

(54) **METHOD AND APPARATUS FOR PERFORMING RANDOM ACCESS PROCESS IN NON-TERRESTRIAL NETWORK**

(57)    The present invention relates to a technology for performing a random access process in a non-terrestrial network. There may be provided a method for a user equipment (UE) comprising the steps of: receiving, from a satellite, configuration information related to a random access channel including polarized wave information to be used for transmission of a preamble; determining a polarized wave to be used on the basis of the polarized wave information; selecting a preamble to be transmitted by using the determined polarized wave; and transmitting, to the satellite, the selected preamble by using the determined polarized wave.

[FIG. 8]

EP 4 568 135 A1

**Description**

[Technical Field]

The present disclosure relates to a technique for performing a random access procedure in a non-terrestrial network, and more particularly, to a technique for transmitting a random access channel using polarization in a non-terrestrial network.

[Background Art]

A communication network (e.g. 5G communication network, 6G communication network, etc.) to provide enhanced communication services compared to the existing communication network (e.g. long term evolution (LTE), LTE-Advanced (LTA-A), etc.) is being developed. The 5G communication network (e.g. new radio (NR) communication network) can support not only a frequency band of 6 GHz or below, but also a frequency band of 6 GHz or above. That is, the 5G communication network can support a frequency range (FR1) band and/or FR2 band. The 5G communication network can support various communication services and scenarios compared to the LTE communication network. For example, usage scenarios of the 5G communication network may include enhanced Mobile BroadBand (eMBB), Ultra Reliable Low Latency Communication (URLLC), Massive Machine Type Communication (mMTC), and the like.

The 6G communication network can support a variety of communication services and scenarios compared to the 5G communication network. The 6G communication networks can meet the requirements of hyper-performance, hyper-bandwidth, hyper-space, hyper-precision, hyper-intelligence, and/or hyper-reliability. The 6G communication networks can support various and wide frequency bands and can be applied to various usage scenarios (e.g. terrestrial communication, non-terrestrial communication, sidelink communication, and the like).

The communication network (e.g. 5G communication network, 6G communication network, etc.) may provide communication services to terminals located on the ground. Recently, the demand for communication services for not only terrestrial but also non-terrestrial airplanes, drones, and satellites has been increasing, and for this purpose, technologies for a non-terrestrial network (NTN) have been discussed. The non-terrestrial network may be implemented based on 5G communication technology, 6G communication technology, and/or the like. For example, in the non-terrestrial network, communication between a satellite and a terrestrial communication node or a non-terrestrial communication node (e.g. airplane, drone, or the like) may be performed based on 5G communication technology, 6G communication technology, and/or the like. In the NTN, the satellite may perform functions of a base station in a communication network (e.g. 5G communication network, 6G communication network, and/or the like).

Meanwhile, in a non-terrestrial network, link quality may be degraded due to a long distance between a satellite and a terminal, as well as significant Doppler shifts caused by high-speed movement. To overcome this, it may be required to improve reception performance of a random access channel (RACH) in an initial access process in uplink.

[Disclosure]

[Technical Problem]

The present disclosure is directed to providing a method and an apparatus for performing a random access procedure in a non-terrestrial network by transmitting a random access channel using polarization.

[Technical Solution]

A method of a user equipment (UE) for performing a random access procedure in a non-terrestrial network, according to a first exemplary embodiment of the present disclosure for achieving the above-described objective, may comprise: receiving, from a satellite, random access channel-related configuration information including polarization information indicating a polarization to be used for transmitting a preamble; determining a polarization to be used based on the polarization information; selecting a preamble sequence to be transmitted using the determined polarization; and transmitting the selected preamble sequence to a satellite using the determined polarization.

The polarization information may include information on a polarization type to be used for transmission of the preamble, the polarization type may be at least one of left-handed circular polarization, right-handed circular polarization, or linear polarization, and the determining of the polarization to be used based on the polarization information may comprise: determining the polarization to be used among the left-handed circular polarization, the right-handed circular polarization, or the linear polarization.

The polarization information may include information on polarization types and information on preamble sequences available for each polarization type, and in the determining of the polarization to be used based on the polarization information, the UE may determine a polarization type to be used, and the selecting of the preamble sequence may comprise: selecting the preamble sequence to be transmitted from preamble sequences available for the determined polarization type.

The polarization information may include polarization pattern information, the determining of the polarization to be used based on the polarization information may comprise: determining an order of polarization types for repeatedly transmitting the preamble based on the polarization pattern information, and the transmitting of the selected preamble sequence to the satellite using the determined polarization may comprise: repeatedly transmitting the selected preamble sequence to the satellite based on the determined order of the polarization types.

Here, the polarization pattern information may indicate at least one of R-R-R-L, R-R-L-R, R-L-R-R or L-R-R-R, wherein R may indicate a right-handed circular polarization and L may indicate a left-handed circular polarization.

Here, the polarization pattern information may indicate at least one of V-V-V-H, V-V-H-V, V-H-V-V, or H-V-V-V, wherein V may indicate a vertical polarization and H may indicate a horizontal polarization.

The method may further comprise: receiving, from the satellite, downlink control information (DCI) scrambled with a random access-radio network temporary identifier (RA-RNTI) based on the polarization information; generating the RA-RNTI based on the polarization information; and decoding the DCI using the RA-RNTI.

A method of a satellite for performing a random access procedure in a non-terrestrial network, according to a second exemplary embodiment of the present disclosure for achieving the above-described objective, may comprise: transmitting, to a user equipment (UE), random access channel-related configuration information including polarization information indicating a polarization to be used for transmitting a preamble; receiving, from the UE, a preamble transmitted using a polarization based on the polarization information; and transmitting a response signal for the received preamble to the UE.

The polarization information may include information on a polarization type to be used for transmission of the preamble, and the polarization type may be at least one of left-handed circular polarization, right-handed circular polarization, or linear polarization.

The polarization information may include polarization pattern information, and the receiving of the preamble transmitted from the UE using the polarization based on the polarization information may comprise: repeatedly receiving the preamble repeatedly transmitted based on the polarization pattern information from the UE.

The method may further comprise: identifying the UE based on the polarization pattern information.

The method may further comprise: generating an RA-RNTI based on the polarization information, and the transmitting of the response signal for the received preamble to the UE may comprise: transmitting DCI scrambled with the RA-RNTI; and transmitting the response signal to the UE according to the DCI.

A user equipment (UE) for performing a random access procedure in a non-terrestrial network, according to a third exemplary embodiment of the present disclosure for achieving the above-described objective, may comprise: at least one processor, and the at least one processor may cause the UE to perform: receiving, from a satellite, random access channel-related configuration information including polarization information indicating a polarization to be used for transmitting a preamble; determining a polarization to be used based on the polarization information; selecting a preamble sequence to be transmitted using the determined polarization; and transmitting the selected preamble sequence to a satellite using the determined polarization.

The polarization information may include information on a polarization type to be used for transmission of the preamble, the polarization type may be at least one of left-handed circular polarization, right-handed circular polarization, or linear polarization, and in the determining of the polarization to be used based on the polarization information, the at least one processor may further cause the UE to perform: determining the polarization to be used among the left-handed circular polarization, the right-handed circular polarization, or the linear polarization.

The polarization information may include polarization pattern information; in the determining of the polarization to be used based on the polarization information, the at least one processor may further cause the UE to perform: determining an order of polarization types for repeatedly transmitting the preamble based on the polarization pattern information; and in the transmitting of the selected preamble sequence to the satellite using the determined polarization, the at least one processor may further cause the UE to perform: repeatedly transmitting the selected preamble sequence to the satellite based on the determined order of the polarization types.

The at least one processor may further cause the UE to perform: receiving, from the satellite, downlink control information (DCI) scrambled with a random access-radio network temporary identifier (RA-RNTI) based on the polarization information; generating the RA-RNTI based on the polarization information; and decoding the DCI using the RA-RNTI.

[Advantageous Effects]

According to the present disclosure, a non-terrestrial network can increase the number of preamble combinations by additionally applying polarizations. Furthermore, according to the present disclosure, the non-terrestrial network can reduce a probability of contention that occurs when multiple terminals select the same preamble sequence.

Additionally, according to the present disclosure, the non-terrestrial network can increase the number of random access channel combinations by utilizing polarizations in the repeated transmissions of the random access channel. Moreover, according to the present disclosure, the non-terrestrial network can expect an improvement in reception performance through diversity.

[Description of Drawings]

FIG. 1A is a conceptual diagram illustrating a first exemplary embodiment of a non-terrestrial network.
FIG. 1B is a conceptual diagram illustrating a second exemplary embodiment of a non-terrestrial network.
FIG. 2A is a conceptual diagram illustrating a third exemplary embodiment of a non-terrestrial network.
FIG. 2B is a conceptual diagram illustrating a fourth exemplary embodiment of a non-terrestrial network.
FIG. 2C is a conceptual diagram illustrating a fifth exemplary embodiment of a non-terrestrial network.
FIG. 3 is a block diagram illustrating a first exemplary embodiment of a communication node constituting a non-terrestrial network.
FIG. 4 is a block diagram illustrating a first exemplary embodiment of communication nodes performing communication.
FIG. 5A is a block diagram illustrating a first exemplary embodiment of a transmission path.
FIG. 5B is a block diagram illustrating a first exemplary embodiment of a reception path.
FIG. 6A is a conceptual diagram illustrating a first exemplary embodiment of a protocol stack of a user plane in a transparent payload-based non-terrestrial network.
FIG. 6B is a conceptual diagram illustrating a first exemplary embodiment of a protocol stack of a control plane in a transparent payload-based non-terrestrial network.
FIG. 7A is a conceptual diagram illustrating a first exemplary embodiment of a protocol stack of a user plane in a regenerative payload-based non-terrestrial network.
FIG. 7B is a conceptual diagram illustrating a first exemplary embodiment of a protocol stack of a control plane in a regenerative payload-based non-terrestrial network.
FIG. 8 is a sequence chart illustrating a first exemplary embodiment of a method for performing a random access procedure in a non-terrestrial network.
FIG. 9 is a sequence chart illustrating a second exemplary embodiment of a method for performing a random access procedure in a non-terrestrial network.
FIG. 10 is a conceptual diagram illustrating a first exemplary embodiment of a process for transmitting a preamble using a polarization pattern in FIG. 8 and FIG. 9.

[Best mode of the Invention]

While the present disclosure is capable of various modifications and alternative forms, specific embodiments thereof are shown by way of example in the drawings and will herein be described in detail. It should be understood, however, that there is no intent to limit the present disclosure to the particular forms disclosed, but on the contrary, the present disclosure is to cover all modifications, equivalents, and alternatives falling within the spirit and scope of the present disclosure. Like numbers refer to like elements throughout the description of the figures.
It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present disclosure. As used herein, the term "and/or" includes any and all combinations of one or more of the associated listed items.
In the present disclosure, "at least one of A and B" may mean "at least one of A or B" or "at least one of combinations of one or more of A and B". Also, in exemplary embodiments of the present disclosure, "one or more of A and B" may mean "one or more of A or B" or "one or more of combinations of one or more of A and B".
In the present disclosure, "(re)transmission" may refer to "transmission", "retransmission", or "transmission and retransmission", "(re)configuration" may refer to "configuration", "reconfiguration", or "configuration and reconfiguration", "(re)connection" may refer to "connection", "reconnection", or "connection and reconnection", and "(re)access" may mean "access", "re-access", or "access and re-access".
It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present.

The terminology used herein is for the purpose of describing particular embodiments only and is not intended to be limiting of the present disclosure. As used herein, the singular forms are intended to include the plural forms as well, unless the context clearly indicates otherwise. It will be further understood that the terms "comprise" and/or "include" when used herein, specify the presence of stated features, integers, steps, operations, elements, components or combinations thereof, but do not preclude the presence or addition of one or more other features, integers, steps, operations, elements, components, and/or combinations thereof.

Unless otherwise defined, all terms (including technical and scientific terms) used herein have the same meaning as commonly understood by one of ordinary skill in the art to which this present disclosure belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, exemplary embodiments of the present disclosure will be described in greater detail with reference to the accompanying drawings. In order to facilitate general understanding in describing the present disclosure, the same components in the drawings are denoted with the same reference signs, and repeated description thereof will be omitted. In addition to the exemplary embodiments explicitly described in the present disclosure, operations may be performed according to a combination of the exemplary embodiments, extensions of the exemplary embodiments, and/or modifications of the exemplary embodiments. Performance of some operations may be omitted, and the order of performance of operations may be changed.

Even when a method (e.g. transmission or reception of a signal) performed at a first communication node among communication nodes is described, a corresponding second communication node may perform a method (e.g. reception or transmission of the signal) corresponding to the method performed at the first communication node. That is, when an operation of a user equipment (UE) is described, a base station corresponding to the UE may perform an operation corresponding to the operation of the UE. Conversely, when an operation of a base station is described, a UE corresponding to the base station may perform an operation corresponding to the operation of the base station. In a non-terrestrial network (NTN) (e.g. payload-based NTN), operations of a base station may refer to operations of a satellite, and operations of a satellite may refer to operations of a base station.

The base station may refer to a NodeB, evolved NodeB (eNodeB), next generation node B (gNodeB), gNB, device, apparatus, node, communication node, base transceiver station (BTS), radio remote head (RRH), transmission reception point (TRP), radio unit (RU), road side unit (RSU), radio transceiver, access point, access node, and/or the like. The UE may refer to a terminal, device, apparatus, node, communication node, end node, access terminal, mobile terminal, station, subscriber station, mobile station, portable subscriber station, on-broad unit (OBU), and/or the like.

In the present disclosure, signaling may be at least one of higher layer signaling, medium access control (MAC) signaling, or physical (PHY) signaling. Messages used for higher layer signaling may be referred to as 'higher layer messages' or 'higher layer signaling messages'. Messages used for MAC signaling may be referred to as 'MAC messages' or 'MAC signaling messages'. Messages used for PHY signaling may be referred to as 'PHY messages' or 'PHY signaling messages'. The higher layer signaling may refer to a transmission and reception operation of system information (e.g. master information block (MIB), system information block (SIB)) and/or RRC messages. The MAC signaling may refer to a transmission and reception operation of a MAC control element (CE). The PHY signaling may refer to a transmission and reception operation of control information (e.g. downlink control information (DCI), uplink control information (UCI), and sidelink control information (SCI)).

In the present disclosure, "an operation (e.g. transmission operation) is configured" may mean that "configuration information (e.g. information element(s) or parameter(s)) for the operation and/or information indicating to perform the operation is signaled". "Information element(s) (e.g. parameter(s)) are configured" may mean that "corresponding information element(s) are signaled". In the present disclosure, "signal and/or channel" may mean a signal, a channel, or "signal and channel," and "signal" may be used to mean "signal and/or channel".

A communication system may include at least one of a terrestrial network, non-terrestrial network, 4G communication network (e.g. long-term evolution (LTE) communication network), 5G communication network (e.g. new radio (NR) communication network), or 6G communication network. Each of the 4G communications network, 5G communications network, and 6G communications network may include a terrestrial network and/or a non-terrestrial network. The non-terrestrial network may operate based on at least one communication technology among the LTE communication technology, 5G communication technology, or 6G communication technology. The non-terrestrial network may provide communication services in various frequency bands.

The communication network to which exemplary embodiments are applied is not limited to the content described below, and the exemplary embodiments may be applied to various communication networks (e.g. 4G communication network, 5G communication network, and/or 6G communication network). Here, a communication network may be used in the same sense as a communication system.

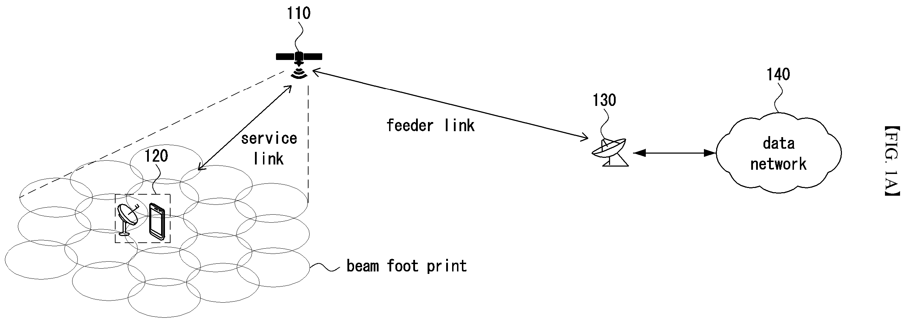

FIG. 1A is a conceptual diagram illustrating a first exemplary embodiment of a non-terrestrial network.

As shown in FIG. 1A, a non-terrestrial network (NTN) may include a satellite 110, a communication node 120, a gateway 130, a data network 140, and the like. A unit including the satellite 110 and the gateway 130 may correspond to a remote radio unit (RRU). The NTN shown in FIG. 1A may be an NTN based on a transparent payload. The satellite 110 may be a low earth orbit (LEO) satellite, a medium earth orbit (MEO) satellite, a geostationary earth orbit (GEO) satellite, a high elliptical orbit (HEO) satellite, or an unmanned aircraft system (UAS) platform. The UAS platform may include a high altitude platform station (HAPS). A non-GEO satellite may be an LEO satellite and/or MEO satellite.

The communication node 120 may include a communication node (e.g. a user equipment (UE) or a terminal) located on a terrestrial site and a communication node (e.g. an airplane, a drone) located on a non-terrestrial space. A service link may be established between the satellite 110 and the communication node 120, and the service link may be a radio link. The satellite 110 may be referred to as an NTN payload. The gateway 130 may support a plurality of NTN payloads. The satellite 110 may provide communication services to the communication node 120 using one or more beams. The shape of a footprint of the beam of the satellite 110 may be elliptical or circular.

In the non-terrestrial network, three types of service links can be supported as follows.

- Earth-fixed: a service link may be provided by beam(s) that continuously cover the same geographic area at all times (e.g. geosynchronous orbit (GSO) satellite).
- quasi-earth-fixed: a service link may be provided by beam(s) covering one geographical area during a limited period and provided by beam(s) covering another geographical area during another period (e.g. non-GSO (NGSO) satellite forming steerable beams).
- earth-moving: a service link may be provided by beam(s) moving over the Earth's surface (e.g. NGSO satellite forming fixed beams or non-steerable beams).

The communication node 120 may perform communications (e.g. downlink communication and uplink communication) with the satellite 110 using 4G communication technology, 5G communication technology, and/or 6G communication technology. The communications between the satellite 110 and the communication node 120 may be performed using an NR-Uu interface and/or 6G-Uu interface. When dual connectivity (DC) is supported, the communication node 120 may be connected to other base stations (e.g. base stations supporting 4G, 5G, and/or 6G functionality) as well as the satellite 110, and perform DC operations based on the techniques defined in 4G, 5G, and/or 6G technical specifications.

The gateway 130 may be located on a terrestrial site, and a feeder link may be established between the satellite 110 and the gateway 130. The feeder link may be a radio link. The gateway 130 may be referred to as a 'non-terrestrial network (NTN) gateway'. The communications between the satellite 110 and the gateway 130 may be performed based on an NR-Uu interface, a 6G-Uu interface, or a satellite radio interface (SRI). The gateway 130 may be connected to the data network 140. There may be a 'core network' between the gateway 130 and the data network 140. In this case, the gateway 130 may be connected to the core network, and the core network may be connected to the data network 140. The core network may support the 4G communication technology, 5G communication technology, and/or 6G communication technology. For example, the core network may include an access and mobility management function (AMF), a user plane function (UPF), a session management function (SMF), and the like. The communications between the gateway 130 and the core network may be performed based on an NG-C/U interface or 6G-C/U interface.

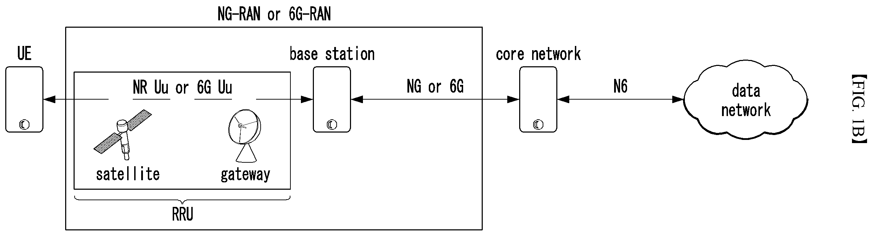

As shown in an exemplary embodiment of FIG. 1B, there may be a 'core network' between the gateway 130 and the data network 140 in a transparent payload-based NTN.

FIG. 1B is a conceptual diagram illustrating a second exemplary embodiment of a non-terrestrial network.

As shown in FIG. 1B, the gateway may be connected with the base station, the base station may be connected with the core network, and the core network may be connected with the data network. Each of the base station and core network may support the 4G communication technology, 5G communication technology, and/or 6G communication technology. The communications between the gateway and the base station may be performed based on an NR-Uu interface or 6G-Uu interface, and the communications between the base station and the core network (e.g. AMF, UPF, SMF, and the like) may be performed based on an NG-C/U interface or 6G-C/U interface.

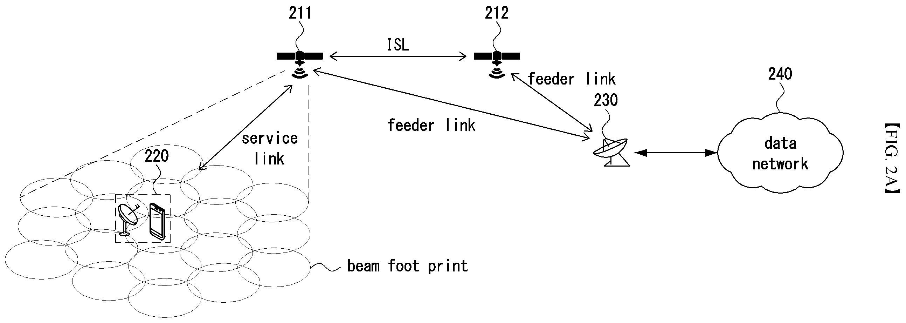

FIG. 2A is a conceptual diagram illustrating a third exemplary embodiment of a non-terrestrial network.

As shown in FIG. 2A, a non-terrestrial network may include a first satellite 211, a second satellite 212, a communication node 220, a gateway 230, a data network 240, and the like. The NTN shown in FIG. 2A may be a regenerative payload based NTN. For example, each of the satellites 211 and 212 may perform a regenerative operation (e.g. demodulation, decoding, re-encoding, re-modulation, and/or filtering operation) on a payload received from other entities (e.g. the communication node 220 or the gateway 230), and transmit the regenerated payload.

Each of the satellites 211 and 212 may be a LEO satellite, a MEO satellite, a GEO satellite, a HEO satellite, or a UAS platform. The UAS platform may include a HAPS. The satellite 211 may be connected to the satellite 212, and an inter-satellite link (ISL) may be established between the satellite 211 and the satellite 212. The ISL may operate in an RF frequency band or an optical band. The ISL may be established optionally. The communication node 220 may include a terrestrial communication node (e.g. UE or terminal) and a non-terrestrial communication node (e.g. airplane or drone). A service link (e.g. radio link) may be established between the satellite 211 and communication node 220. The satellite 211 may provide communication services to the communication node 220 using one or more beams.

The communication node 220 may perform communications (e.g. downlink communication or uplink communication) with the satellite 211 using the 4G communication technology, 5G communication technology, and/or 6G communication technology. The communications between the satellite 211 and the communication node 220 may be performed using an NR-Uu interface or 6G-Uu interface. When DC is supported, the communication node 220 may be connected to other base stations (e.g. base stations supporting 4G, 5G, and/or 6G functionality) as well as the satellite 211, and may perform DC operations based on the techniques defined in 4G, 5G, and/or 6G technical specifications.

The gateway 230 may be located on a terrestrial site, a feeder link may be established between the satellite 211 and the gateway 230, and a feeder link may be established between the satellite 212 and the gateway 230. The feeder link may be a radio link. When the ISL is not established between the satellite 211 and the satellite 212, the feeder link between the satellite 211 and the gateway 230 may be established mandatorily. The communications between each of the satellites 211 and 212 and the gateway 230 may be performed based on an NR-Uu interface, a 6G-Uu interface, or an SRI. The gateway 230 may be connected to the data network 240.

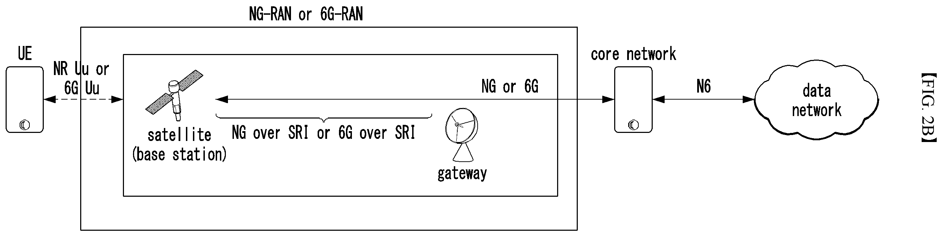

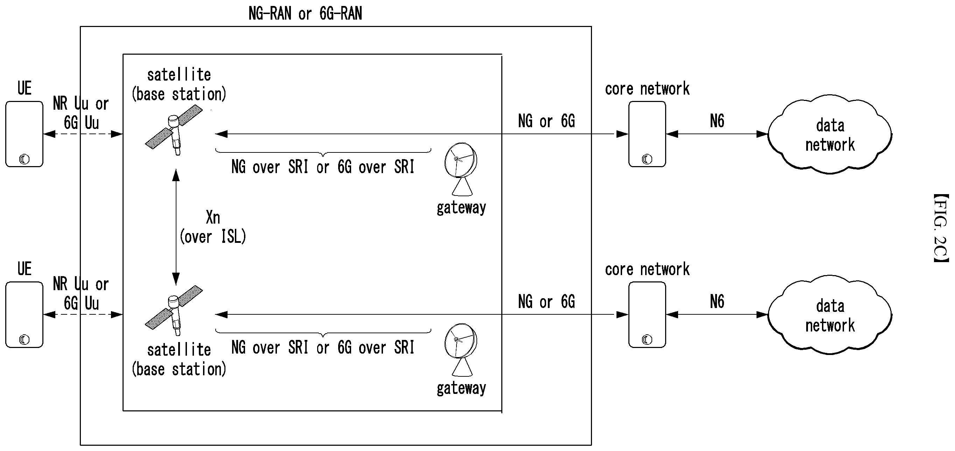

As shown in exemplary embodiments of FIG. 2B and FIG. 2C, there may be a 'core network' between the gateway 230 and the data network 240.

FIG. 2B is a conceptual diagram illustrating a fourth exemplary embodiment of a non-terrestrial network, and FIG. 2C is a conceptual diagram illustrating a fifth exemplary embodiment of a non-terrestrial network.

As shown in FIG. 2B and FIG. 2C, the gateway may be connected with the core network, and the core network may be connected with the data network. The core network may support the 4G communication technology, 5G communication technology, and/or 6G communication technology. For example. The core network may include AMF, UPF, SMF, and the like. Communication between the gateway and the core network may be performed based on an NG-C/U interface or 6G-C/U interface. Functions of a base station may be performed by the satellite. That is, the base station may be located on the satellite. The base station located on the satellite may be a base station-distributed unit (DU), and a base station-centralized unit (CU) may be located within an NG-RAN or a 6G-RAN. A payload may be processed by the base station located on the satellite. Base stations located on different satellites may be connected to the same core network. One satellite may have one or more base stations. In the non-terrestrial network of FIG. 2B, an ISL between satellites may not be established, and in the non-terrestrial network of FIG. 2C, an ISL between satellites may be established.

Meanwhile, the entities (e.g. satellite, base station, UE, communication node, gateway, and the like) constituting the non-terrestrial network shown in FIGS. 1A, 1B, 2A, 2B, and/or 2C may be configured as follows. In the present disclosure, the entity may be referred to as a communication node.

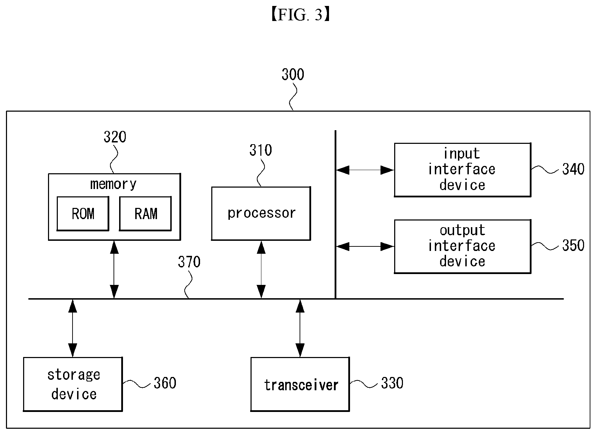

FIG. 3 is a block diagram illustrating a first exemplary embodiment of a communication node constituting a non-terrestrial network.

As shown in FIG. 3, a communication node 300 may include at least one processor 310, a memory 320, and a transceiver 330 connected to a network to perform communication. In addition, the communication node 300 may further include an input interface device 340, an output interface device 350, a storage device 360, and the like. The components included in the communication node 300 may be connected by a bus 370 to communicate with each other.

However, each component included in the communication node 300 may be connected to the processor 310 through a separate interface or a separate bus instead of the common bus 370. For example, the processor 310 may be connected to at least one of the memory 320, the transceiver 330, the input interface device 340, the output interface device 350, and the storage device 360 through a dedicated interface.

The processor 310 may execute at least one instruction stored in at least one of the memory 320 and the storage device 360. The processor 310 may refer to a central processing unit (CPU), a graphics processing unit (GPU), or a dedicated processor on which the methods according to the exemplary embodiments of the present disclosure are performed. Each of the memory 320 and the storage device 360 may be configured as at least one of a volatile storage medium and a nonvolatile storage medium. For example, the memory 320 may be configured with at least one of a read only memory (ROM) and a random access memory (RAM).

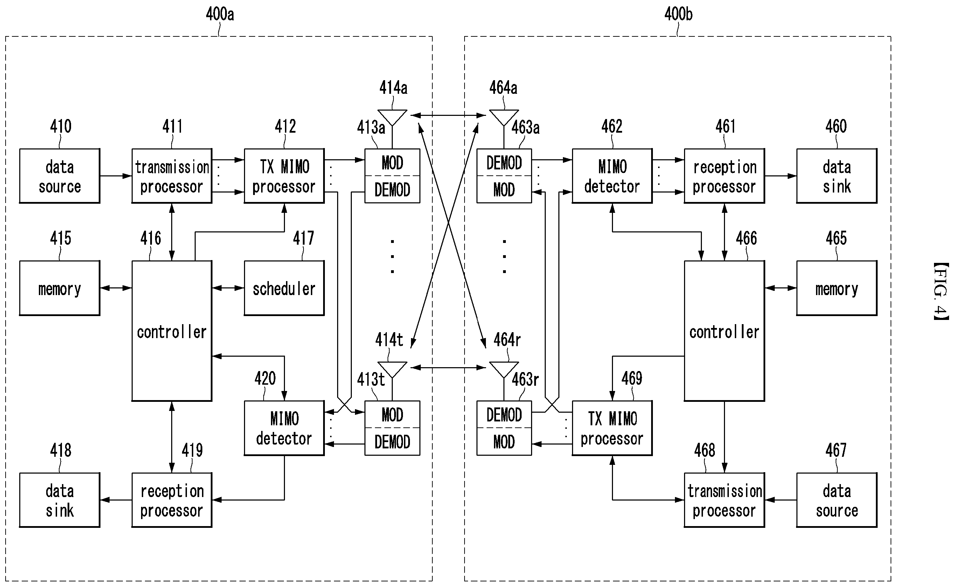

Meanwhile, communication nodes that perform communications in the communication network (e.g. non-terrestrial network) may be configured as follows. A communication node shown in FIG. 4 may be a specific exemplary embodiment of the communication node shown in FIG. 3.

FIG. 4 is a block diagram illustrating a first exemplary embodiment of communication nodes performing communication.

As shown in FIG. 4, each of a first communication node 400a and a second communication node 400b may be a base station or UE. The first communication node 400a may transmit a signal to the second communication node 400b. A transmission processor 411 included in the first communication node 400a may receive data (e.g. data unit) from a data source 410. The transmission processor 411 may receive control information from a controller 416. The control information may include at least one of system information, RRC configuration information (e.g. information configured by RRC signaling), MAC control information (e.g. MAC CE), or PHY control information (e.g. DCI, SCI).

The transmission processor 411 may generate data symbol(s) by performing processing operations (e.g. encoding operation, symbol mapping operation, etc.) on the data. The transmission processor 411 may generate control symbol(s) by performing processing operations (e.g. encoding operation, symbol mapping operation, etc.) on the control information. In addition, the transmission processor 411 may generate synchronization/reference symbol(s) for synchronization signals and/or reference signals.

A Tx MIMO processor 412 may perform spatial processing operations (e.g. precoding operations) on the data symbol(s), control symbol(s), and/or synchronization/reference symbol(s). An output (e.g. symbol stream) of the Tx MIMO processor 412 may be provided to modulators (MODs) included in transceivers 413a to 413t. The modulator may generate modulation symbols by performing processing operations on the symbol stream, and may generate signals by performing additional processing operations (e.g. analog conversion operations, amplification operation, filtering operation, up-conversion operation, etc.) on the modulation symbols. The signals generated by the modulators of the transceivers 413a to 413t may be transmitted through antennas 414a to 414t.

The signals transmitted by the first communication node 400a may be received at antennas 464a to 464r of the second communication node 400b. The signals received at the antennas 464a to 464r may be provided to demodulators (DEMODs) included in transceivers 463a to 463r. The demodulator (DEMOD) may obtain samples by performing processing operations (e.g. filtering operation, amplification operation, down-conversion operation, digital conversion operation, etc.) on the signals. The demodulator may perform additional processing operations on the samples to obtain symbols. A MIMO detector 462 may perform MIMO detection operations on the symbols. A reception processor 461 may perform processing operations (e.g. de-interleaving operation, decoding operation, etc.) on the symbols. An output of the reception processor 461 may be provided to a data sink 460 and a controller 466. For example, the data may be provided to the data sink 460 and the control information may be provided to the controller 466.

On the other hand, the second communication node 400b may transmit signals to the first communication node 400a. A transmission processor 469 included in the second communication node 400b may receive data (e.g. data unit) from a data source 467 and perform processing operations on the data to generate data symbol(s). The transmission processor 468 may receive control information from the controller 466 and perform processing operations on the control information to generate control symbol(s). In addition, the transmission processor 468 may generate reference symbol(s) by performing processing operations on reference signals.

A Tx MIMO processor 469 may perform spatial processing operations (e.g. precoding operations) on the data symbol(s), control symbol(s), and/or reference symbol(s). An output (e.g. symbol stream) of the Tx MIMO processor 469 may be provided to modulators (MODs) included in the transceivers 463a to 463t. The modulator may generate modulation symbols by performing processing operations on the symbol stream, and may generate signals by performing additional processing operations (e.g. analog conversion operation, amplification operation, filtering operation, up-conversion operations) on the modulation symbols. The signals generated by the modulators of the transceivers 463a to 463t may be transmitted through the antennas 464a to 464t.

The signals transmitted by the second communication node 400b may be received at the antennas 414a to 414r of the first communication node 400a. The signals received at the antennas 414a to 414r may be provided to demodulators (DEMODs) included in the transceivers 413a to 413r. The demodulator may obtain samples by performing processing operations (e.g. filtering operation, amplification operation, down-conversion operation, digital conversion operation) on the signals. The demodulator may perform additional processing operations on the samples to obtain symbols. A MIMO detector 420 may perform a MIMO detection operation on the symbols. The reception processor 419 may perform processing operations (e.g. de-interleaving operation, decoding operation, etc.) on the symbols. An output of the reception processor 419 may be provided to a data sink 418 and the controller 416. For example, the data may be provided to the data sink 418 and the control information may be provided to the controller 416.

Memories 415 and 465 may store the data, control information, and/or program codes. A scheduler 417 may perform scheduling operations for communication. The processors 411, 412, 419, 461, 468, and 469 and the controllers 416 and 466 shown in FIG. 4 may be the processor 310 shown in FIG. 3, and may be used to perform methods described in the present disclosure.

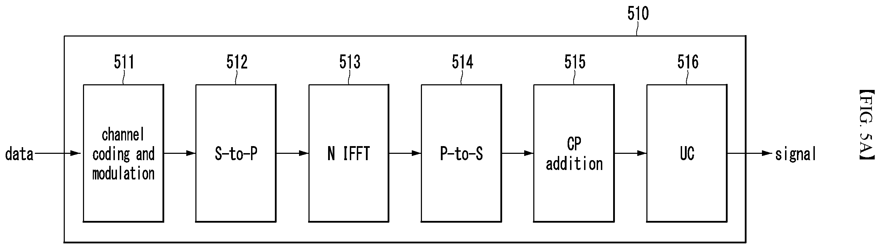

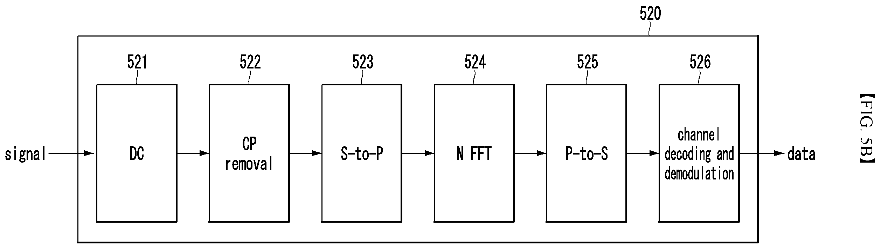

FIG. 5A is a block diagram illustrating a first exemplary embodiment of a transmission path, and FIG. 5B is a block diagram illustrating a first exemplary embodiment of a reception path.

As shown in FIGS. 5A and 5B, a transmission path 510 may be implemented in a communication node that transmits signals, and a reception path 520 may be implemented in a communication node that receives signals. The transmission path 510 may include a channel coding and modulation block 511, a serial-to-parallel (S-to-P) block 512, an N-point inverse fast Fourier transform (N-point IFFT) block 513, a parallel-to-serial (P-to-S) block 514, a cyclic prefix (CP) addition block 515, and up-converter (UC) 516. The reception path 520 may include a down-converter (DC) 521, a CP removal block 522, an S-to-P block 523, an N-point FFT block 524, a P-to-S block 525, and a channel decoding and demodulation block 526. Here, N may be a natural number.

In the transmission path 510, information bits may be input to the channel coding and modulation block 511. The channel coding and modulation block 511 may perform a coding operation (e.g. low-density parity check (LDPC) coding operation, polar coding operation, etc.) and a modulation operation (e.g. Quadrature Phase Shift Keying (OPSK), Quadrature Amplitude Modulation (QAM), etc.) on the information bits. An output of the channel coding and modulation block 511 may be a sequence of modulation symbols.

The S-to-P block 512 may convert frequency domain modulation symbols into parallel symbol streams to generate N parallel symbol streams. N may be the IFFT size or the FFT size. The N-point IFFT block 513 may generate time domain signals by performing an IFFT operation on the N parallel symbol streams. The P-to-S block 514 may convert the output (e.g., parallel signals) of the N-point IFFT block 513 to serial signals to generate the serial signals.

The CP addition block 515 may insert a CP into the signals. The UC 516 may up-convert a frequency of the output of the CP addition block 515 to a radio frequency (RF) frequency. Further, the output of the CP addition block 515 may be filtered in baseband before the up-conversion.

The signal transmitted from the transmission path 510 may be input to the reception path 520. Operations in the reception path 520 may be reverse operations for the operations in the transmission path 510. The DC 521 may down-convert a frequency of the received signals to a baseband frequency. The CP removal block 522 may remove a CP from the signals. The output of the CP removal block 522 may be serial signals. The S-to-P block 523 may convert the serial signals into parallel signals. The N-point FFT block 524 may generate N parallel signals by performing an FFT algorithm. The P-to-S block 525 may convert the parallel signals into a sequence of modulation symbols. The channel decoding and demodulation block 526 may perform a demodulation operation on the modulation symbols and may restore data by performing a decoding operation on a result of the demodulation operation.

In FIGS. 5A and 5B, discrete Fourier transform (DFT) and inverse DFT (IDFT) may be used instead of FFT and IFFT. Each of the blocks (e.g. components) in FIGS. 5A and 5B may be implemented by at least one of hardware, software, or firmware. For example, some blocks in FIGS. 5A and 5B may be implemented by software, and other blocks may be implemented by hardware or a combination of hardware and software. In FIGS. 5A and 5B, one block may be subdivided into a plurality of blocks, a plurality of blocks may be integrated into one block, some blocks may be omitted, and blocks supporting other functions may be added.

Meanwhile, NTN reference scenarios may be defined as shown in Table 1 below.

[Table 1]

|  | **NTN shown in FIG. 1** | **NTN shown in FIG. 2** |
|---|---|---|
| GEO | Scenario A | Scenario B |
| LEO (steerable beams) | Scenario C1 | Scenario D1 |
| LEO (beams moving with satellite) | Scenario C2 | Scenario D2 |

When the satellite 110 in the NTN shown in FIG. 1A and/or FIG. 1B is a GEO satellite (e.g. a GEO satellite that supports a transparent function), this may be referred to as 'scenario A'. When the satellites 211 and 212 in the NTN shown in FIG. 2A, FIG. 2B, and/or FIG. 2C are GEO satellites (e.g. GEOs that support a regenerative function), this may be referred to as 'scenario B'. When the satellite 110 in the NTN shown in FIG. 1A and/or FIG. 1B is an LEO satellite with steerable beams, this may be referred to as 'scenario C1'. When the satellite 110 in the NTN shown in FIG. 1A and/or FIG. 1B is an LEO satellite having beams moving with the satellite, this may be referred to as 'scenario C2'. When the satellites 211 and 212 in the NTN shown in FIG. 2A, FIG. 2B, and/or FIG. 2C are LEO satellites with steerable beams, this may be referred to as 'scenario D1'. When the satellites 211 and 212 in the NTN shown in FIG. 2A, FIG. 2B, and/or FIG. 2C are LEO satellites having beams moving with the satellites, this may be referred to as 'scenario D2'.

Parameters for the NTN reference scenarios defined in Table 1 may be defined as shown in Table 2 below.

[Table 2]

|  | **Scenarios A and B** | **Scenarios C and D** |
|---|---|---|
| Altitude | 35,786 km | 600 km<br>1,200 km |
| Spectrum (service link) | | < 6 GHz (e.g. 2 GHz)<br>> 6 GHz (e.g. DL 20 GHz, UL 30 GHz) |

(continued)

|  | Scenarios A and B | Scenarios C and D |
|---|---|---|
| Maximum channel bandwidth capability (service link) | 30 MHz for band <6 GHz<br>1 GHz for band >6 GHz |  |
| Maximum distance between satellite and communication node (e.g. UE) at the minimum elevation angle | 40,581 km | 1,932 km (altitude of 600 km)<br>3,131 km (altitude of 1,200 km) |
| Maximum round trip delay (RTD) (only propagation delay) | Scenario A: 541.46 ms (service and feeder links)<br>Scenario B: 270.73 ms (only service link) | Scenario C: (transparent payload: service and feeder links)<br>-5.77 ms (altitude of 60 0km)<br>-41.77 ms (altitude of 1,200 km)<br>Scenario D: (regenerative payload: only service link)<br>-12.89 ms (altitude of 600 km)<br>-20.89 ms (altitude of 1,200 km) |
| Maximum differential delay within a cell | 10.3 ms | 3.12 ms (altitude of 600 km)<br>3.18 ms (altitude of 1,200 km) |
| Service link | NR defined in 3GPP | |
| Feeder link | Radio interfaces defined in 3GPP or non-3GPP | |

In addition, in the scenarios defined in Table 1, delay constraints may be defined as shown in Table 3 below.

[Table 3]

|  | Scenario A | Scenario B | Scenario C1-2 | Scenario D1-2 |
|---|---|---|---|---|
| Satellite altitude | 35,786 km | | 600 km | |
| Maximum RTD in a radio interface between base station and UE | 541.75 ms (worst case) | 270.57 ms | 28.41 ms | 12.88 ms |
| Minimum RTD in a radio interface between base station and UE | 477.14 ms | 238.57 ms | 8 ms | 4 ms |

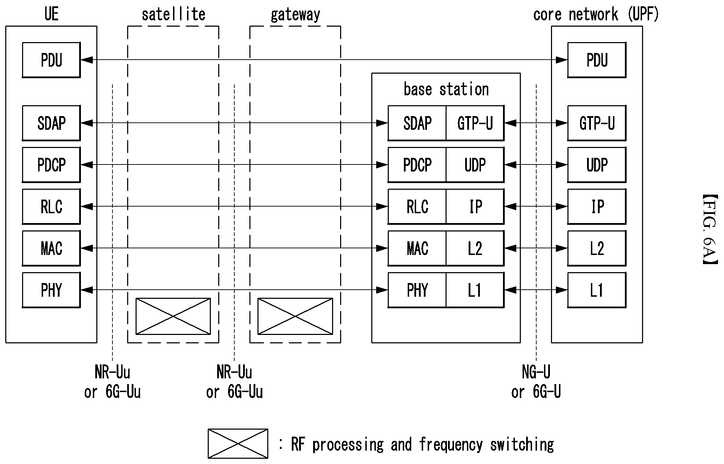

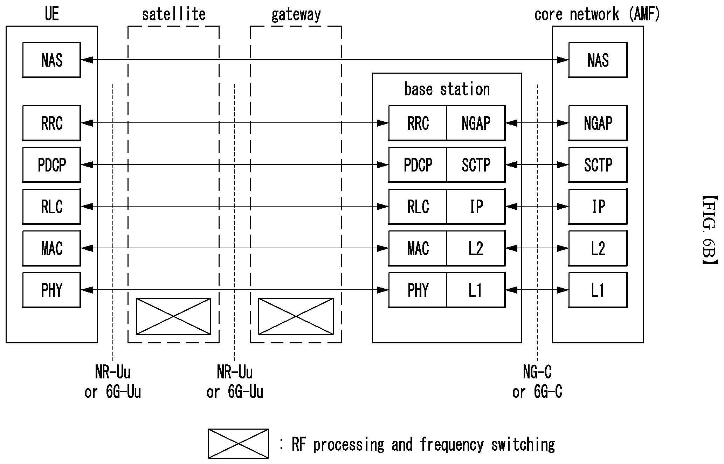

FIG. 6A is a conceptual diagram illustrating a first exemplary embodiment of a protocol stack of a user plane in a transparent payload-based non-terrestrial network, and FIG. 6B is a conceptual diagram illustrating a first exemplary embodiment of a protocol stack of a control plane in a transparent payload-based non-terrestrial network. As shown in FIGS. 6A and 6B, user data may be transmitted and received between a UE and a core network (e.g. UPF), and control data (e.g. control information) may be transmitted and received between the UE and the core network (e.g. AMF). Each of the user data the and control data may be transmitted and received through a satellite and/or gateway. The protocol stack of the user plane shown in FIG. 6A may be applied identically or similarly to a 6G communication network. The protocol stack of the control plane shown in FIG. 6B may be applied identically or similarly to a 6G communication network.

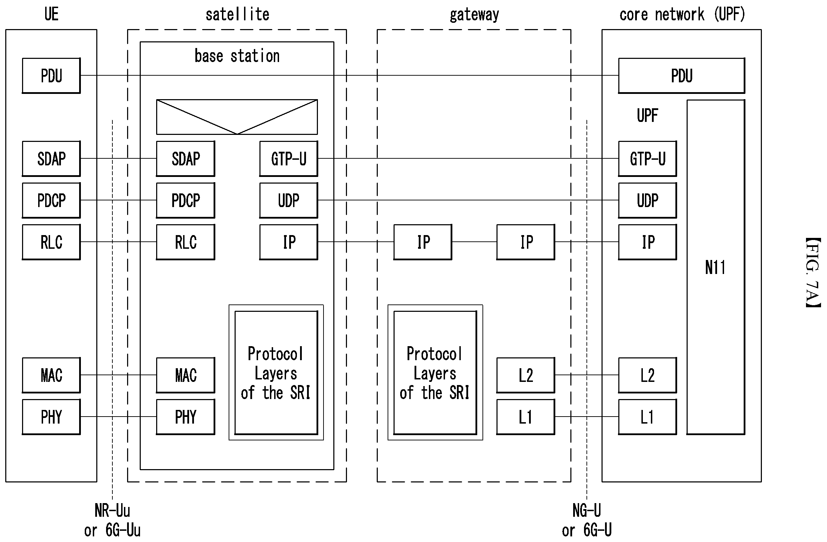

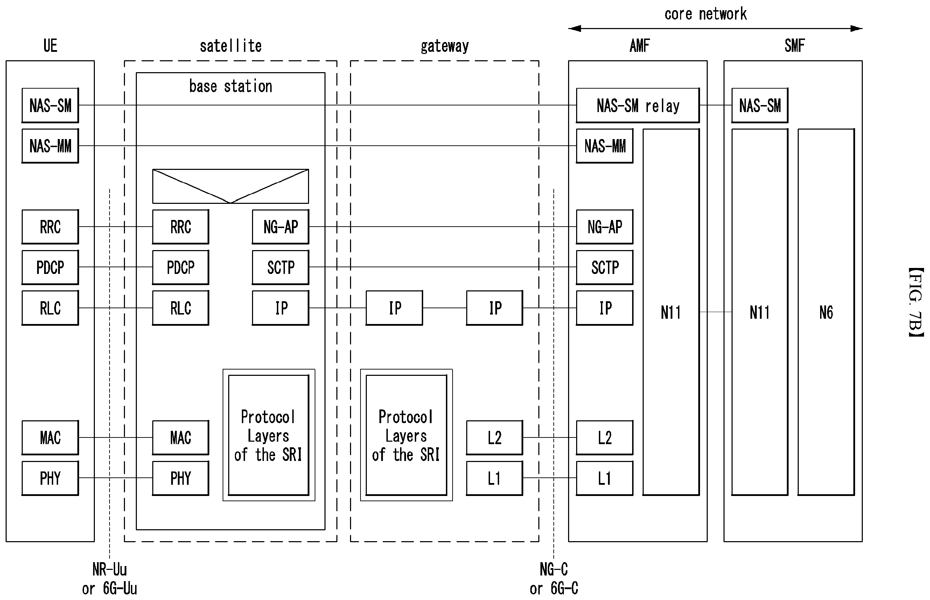

FIG. 7A is a conceptual diagram illustrating a first exemplary embodiment of a protocol stack of a user plane in a regenerative payload-based non-terrestrial network, and FIG. 7B is a conceptual diagram illustrating a first exemplary embodiment of a protocol stack of a control plane in a regenerative payload-based non-terrestrial network.

As shown in FIGS. 7A and 7B, each of user data and control data (e.g. control information) may be transmitted and received through an interface between a UE and a satellite (e.g. base station). The user data may refer to a user protocol data unit (PDU). A protocol stack of a satellite radio interface (SRI) may be used to transmit and receive the user data and/or control data between the satellite and a gateway. The user data may be transmitted and received through a general packet radio service (GPRS) tunneling protocol (GTP)-U tunnel between the satellite and a core network.

Meanwhile, in a non-terrestrial network, a base station may transmit system information (e.g. SIB 19) including satellite assistance information for NTN access. A UE may receive the system information (e.g. SIB 19) from the base station, identify the satellite assistance information included in the system information, and perform communication (e.g. non-terrestrial communication) based on the satellite assistance information. The SIB19 may include information element(s) defined in Table 4 below.

[Table 4]

```
    SIB19-r17 ::= SEQUENCE {

ntn-Config-r17                          NTN-Config-r17
t-Service-r17                           INTEGER(0..549755813887)
referenceLocation-r17                   ReferenceLocation-r17
distanceThresh-r17                      INTEGER(0..65525)
ntn-NeighCellConfigList-r17             NTN-NeighCellConfigList-r17
lateNonCriticalExtension                OCTET STRING
...,
[[
ntn-NeighCellConfigListExt-v1720        NTN-NeighCellConfigList-r17
]]
}
NTN-NeighCellConfigList-r17 ::=         SEQUENCE (SIZE(1..maxCellNTN-r17))    OF
NTN-NeighCellConfig-r17
      NTN-NeighCellConfig-r17 ::=               SEQUENCE {
ntn-Config-r17                          NTN-Config-r17
carrierFreq-r17                         ARFCN-ValueNR
physCellId-r17                          PhysCellId
}
```

*NTN-Config* defined in Table 4 may include information element(s) defined in Table 5 below.

[Table 5]

```
NTN-Config-r17 ::=                  SEQUENCE {
    epochTime-r17                       EpochTime-r17
    ntn-UlSyncValidityDuration-r17 ENUMERATED{ s5, s10, s15, s20, s25, s30, s35,
s40, s45, s50, s55, s60, s120, s180, s240, s900}
    cellSpecificKoffset-r17             INTEGER(1..1023)
    kmac-r17                            INTEGER(1..512)
    ta-Info-r17                         TA-Info-r17
    ntn-PolarizationDL-r17              ENUMERATED {rhcp,lhcp,linear}
    ntn-PolarizationUL-r17              ENUMERATED {rhcp,lhcp,linear}
    ephemerisInfo-r17                   EphemerisInfo-r17
    ta-Report-r17                       ENUMERATED {enabled}

    ...

}
EpochTime-r17 ::=                   SEQUENCE {
    sfn-r17                             INTEGER(0..1023),
    subFrameNR-r17                      INTEGER(0..9)
}
TA-Info-r17 ::=                     SEQUENCE   {
    ta-Common-r17                       INTEGER(0..66485757),
    ta-CommonDrift-r17                  INTEGER(-257303..257303)
    ta-CommonDriftVariant-r17       INTEGER(0..28949)
}
```

*EphemerisInfo* defined in Table 5 may include information element(s) defined in Table 6 below.

[Table 6]

```
EphemerisInfo-r17 ::=              CHOICE {
        positionVelocity-r17          PositionVelocity-r17,
        orbital-r17                   Orbital-r17
}
PositionVelocity-r17 ::=          SEQUENCE {
        positionX-r17                 PositionStateVector-r17,
        positionY-r17                 PositionStateVector-r17,
        positionZ-r17                 PositionStateVector-r17,
        velocityVX-r17                VelocityStateVector-r17,
        velocityVY-r17                VelocityStateVector-r17,
        velocityVZ-r17                VelocityStateVector-r17
}
Orbital-r17 ::=                   SEQUENCE {
        semiMajorAxis-r17             INTEGER (0..8589934591),
        eccentricity-r17              INTEGER (0..1048575),
        periapsis-r17                 INTEGER (0..268435455),
        longitude-r17                 INTEGER (0..268435455),
        inclination-r17               INTEGER (-67108864..67108863),
        meanAnomaly-r17               INTEGER (0..268435455)
}
PositionStateVector-r17 ::= INTEGER (-33554432..33554431)
VelocityStateVector-r17 ::= INTEGER (-131072..131071)
```

Meanwhile, in a non-terrestrial network, link quality may be degraded due to a long distance between a satellite and a terminal and large Doppler shifts caused by high-speed movement. To overcome this, studies on coverage enhancement (CE) have been actively discussed since Release 17. The degradation of link quality may become more pronounced in areas with low elevation angles. Additionally, the degradation of link quality may be even more noticeable in urban and suburban areas with many high-rise buildings. In the uplink, improving reception performance of a random access channel (RACH), which is used in an initial access process, has become a key issue in Release 17, and considerable discussions may take place regarding performance enhancement methods utilizing polarization. The present disclosure proposes methods to improve RACH performance by additionally applying polarization to preambles. The methods proposed in the present disclosure may support performance enhancement for terminals using antennas with low antenna gain, such as handheld terminals. Moreover, the methods proposed in the present disclosure may lead to improved performance of links with a low link budget.

According to the present disclosure, a non-terrestrial network can increase the number of preamble combinations by additionally applying polarizations. Furthermore, according to the present disclosure, the non-terrestrial network can reduce a probability of contention that occurs when multiple terminals select the same preamble sequence. Additionally, according to the present disclosure, the non-terrestrial network can increase the number of random access channel combinations by utilizing polarizations in the repeated transmissions of the random access channel. Moreover, according to the present disclosure, the non-terrestrial network can expect an improvement in reception performance through diversity.

Meanwhile, the 94th 3rd Generation Partnership Project (3GPP) radio access network (RAN) technical plenary in December 2021 has discussed coverage enhancements as follows.

○ The following items are discussed as examples of areas to be considered in the next stage of studies. Additionally, the RAN technical plenary discusses evaluation of coverage issues specific to NTNs that have been identified as actual study items.

- NTN-specific repetition enhancement beyond techniques covered in the Release 17 coverage enhancement work item for related channels
- NTN-specific techniques for improving diversity and/or reducing polarization loss

Meanwhile, at the 109-e meeting of work group 1 (WG1) of the RAN technical plenary in April 2022, LG Electronics primarily has discussed the following as potential enhancement points for initial access procedures.

○ In the Release 17 coverage enhancement (CE) study item stage, coverage enhancement for uplink signals/channels in the initial access procedure may be required. Therefore, repetition of a PRACH preamble and repetition of a Msg3 physical uplink shared channel (PUSCH) may be considered.
○ It may be desirable to consider introducing both repeated PRACH preamble transmission and repeated Msg3 PUSCH transmission in Release 18 NTN.
○ However, since NR does not support repeated PRACH preamble transmission, the following discussion points may need to be considered to support repeated PRACH preamble transmission.
○ It may be necessary to determine the maximum number of repetitions. For example, the maximum number of repetitions for the PRACH preamble may be determined at a level similar to the maximum number (e.g. 8) of repetitions for the Msg3 PUSCH. Furthermore, the maximum number of repetitions may be provided to the UE through higher-layer signaling (e.g. SIB).

Meanwhile, at the 109-e meeting of WG1 of the RAN technology plenary held in April 2022, Lenovo has proposed the following approach for diversity-based coverage enhancement (CE).

○ Frequency hopping is already supported in legacy NR releases, and may continue to be used to provide frequency domain diversity in NR NTN. In the previous discussions related to the specific characteristics of NTN, diversity utilizing different satellites or different carriers has been mentioned. However, the scenario is somewhat complex, and considering the limited TU, it may not be preferable to study this type of diversity in Release 18.
○ Polarization-based diversity may also be considered. Polarization may be supported for both the initial access procedure and data transmission in the Radio Resource Control (RRC) connected state. In the initial access procedure, Synchronization Signal Blocks (SSBs) with different polarization modes may be used. In the RRC connected state, different polarization modes may be used for at least different time-domain resources to achieve diversity gain.

Meanwhile, at the 109-e meeting of WG1 of the RAN technical plenary in April 2022, Sony has discussed the following for improving NTN NR coverage.

○ Polarization indication for NTN communication has been discussed in Release 17, where explicit indication of downlink polarization by a network is supported based on SIB. Meanwhile, information on a polarization for uplink may be indicated by the network in SIB. When information on the polarization for uplink is not provided, UEs may assume the same polarization for both uplink and downlink. In terms of polarization mode, right-hand circular polarization (RHCP), left-hand circular polarization (LHCP), or linear polarization may be indicated in the SIB for both downlink and/or uplink polarization information.

A 5G terminal may select a random preamble in an RACH procedure to acquire uplink synchronization. Each preamble may be associated with a random access-radio network temporary identifier (RA-RNTI). The terminal may transmit the random preamble to a base station as Msg1. The base station may receive the random preamble from the terminal. In this case, the terminal and the base station may derive the RA-RNTI based on a time and frequency position of an RACH occasion (RO) in which the Msg1 has been transmitted. Subsequently, the base station may generate a random access response (RAR) in response to the random preamble received from the terminal.
The RAR may be transmitted through a downlink-shared channel (DL-SCH) which is a transport channel, and may be mapped to a physical downlink shared channel (PDSCH). For transmission of the PDSCH carrying the RAR, the base station may scramble cyclic redundancy check (CRC) bits of a PDCCH using the RA-RNTI. The RA-RNTI may be calculated as in Equation 1.

[Equation 1]

$$RA\text{-}RNTI = 1 + s\_id + 14 \times t\_id + 14 \times 80 \times f\_id + 14 \times 80 \times 8 \times ul\_carrier\_id$$

In Equation 1, s_id (0≤s_id<14) may indicate an index of the first symbol of the RO, and t_id (0≤t_id<80) may indicate an index of the first slot (e.g. starting slot) of the RO within a system frame. In exemplary embodiments, a symbol may refer to an OFDM symbol. t_id may be determined based on a subcarrier spacing (SCS). f_id (0≤f_id<8) may indicate an index of the RO in the frequency domain, and ul_carrier_id may indicate an uplink (UL) carrier on which the PRACH preamble is transmitted. If the UL carrier on which the PRACH preamble is transmitted is a normal uplink (NUL), ul_carrier_id may be set to 0. If the UL carrier on which the PRACH preamble is transmitted is a supplementary uplink (SUL), ul_carrier_id may be set to 1.

For the RACH operation, the terminal may receive system information from the base station, which includes the following:

○ PRACH transmission parameter configuration

- PRACH preamble format
- Time resources
- Frequency resources

○ Parameters for determining a root sequence and a cyclic shift in a PRACH preamble set

- Index for a logical root sequence table
- Cyclic shift
- Set type (unrestricted, restricted set A, or set B)

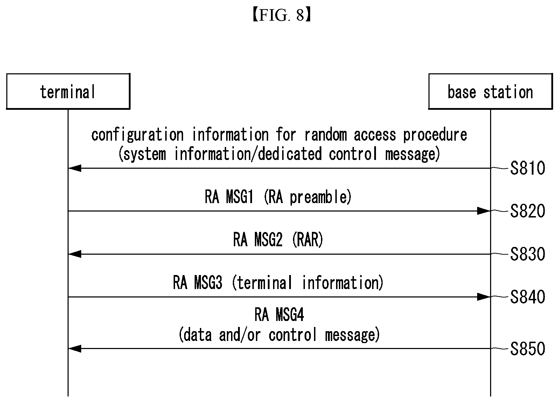

FIG. 8 is a sequence chart illustrating a first exemplary embodiment of a method for performing a random access procedure in a non-terrestrial network.

As shown in FIG. 8, a base station may transmit system information and/or a control message including configuration information for random access procedures (i.e. RACH configuration information) to a terminal (S810). Here, the system information may be common system information used by multiple base stations or base station-specific system information (e.g. cell-specific system information). The control message may be a dedicated control message.

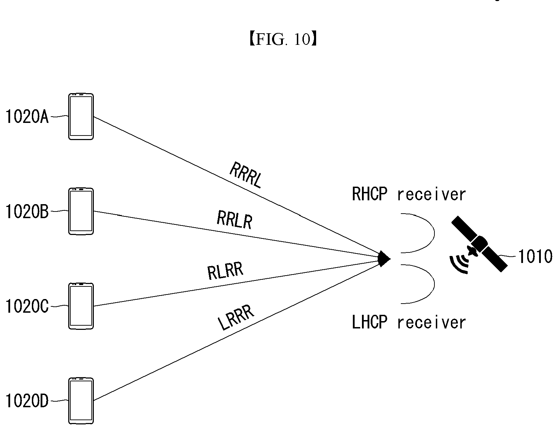

The system information may be configured for each base station, each beam group, or each beam. The system information may include configuration information for random access procedures. The configuration information for random access procedures may include information (i.e. polarization information) on a polarization to be used by the terminal to transmit a preamble. The polarization information may include types of polarization available for use by the terminal. The types of polarization may include left-hand circular polarization (LHCP), right-hand circular polarization (RHCP), and linear polarization (LP). The polarization information may include information on a polarization pattern (i.e. polarization pattern information). Details related to the polarization pattern information are described with reference to FIG. 10. Additionally, the polarization information may include information on a group of preamble sequences transmittable using LHCP, information on a group of preamble sequences transmittable using RHCP, and information on a group of preamble sequences transmittable using linear polarization.

Additionally, the configuration information for random access procedures may include one or more of information on a transmission frequency of a physical layer, information on a system bandwidth, information on a subcarrier spacing, configuration information of beam(s) (e.g. beam width, beam index) according to a beamforming technique, variable configuration information of radio resources in the frequency and/or time domain (e.g. reference value, offset, etc. of the radio resources), or information on inactive (or unused) radio resource region(s)/period(s). Furthermore, the configuration information for random access procedures may include preamble information indicating available preambles.

Accordingly, the terminal may receive the system information and/or control message from the base station. The terminal may identify available polarization types and available preambles. The terminal may then select one polarization from the available polarization types and select one preamble from the available preambles.

Subsequently, the terminal may transmit an RA MSG1 including the selected random access preamble (i.e. RA preamble) to the base station using the selected polarization through a radio resource configured by the base station (e.g. physical random access channel (PRACH)) (S820). In a four-step random access procedure, a message 1 including the RA preamble may be referred to as 'RA MSG1', and the RA preamble in the four-step random access procedure may be referred to as 'four-step RA preamble'.

Describing this in further detail, the terminal may randomly select a code sequence (e.g. preamble, signature) defined for the random access procedure and may transmit the RA MSG1 including the selected code sequence. In a contention-based random access (CBRA) procedure, the terminal may randomly select the preamble. In a contention-free random access (CFRA) procedure, the base station may pre-assign the preamble to the termina. The pre-assignment of the RA preamble may mean that an index, masking information, or the like of the RA preamble for RA MSG1 is exclusively assigned to the terminal. In this case, the terminal may perform the random access procedure (e.g. CFRA procedure) without contention with other terminals.

The base station may receive the RA MSG1 from the terminal. The base station may identify the type of polarization used by the terminal and may identify the preamble used. The base station may generate an RA MSG2 in response to the RA MSG1 and may transmit the RA MSG2 to the terminal (S830). In the four-step random access procedure, the RA MSG2 may refer to a message 2, an random access response (RAR), or an RA response message. The base station may determine necessary information for the terminal based on the RA MSG1 received in step S820 or the radio resource in which the RA MSG1 is received. In this case, the base station may transmit the necessary information to the terminal in step S830.

The determination of the necessary information for the terminal may refer to confirming a 'system information transfer request based on to an on-demand request of the terminal', a 'downlink data transmission request due to an update of terminal firmware or required software', or an 'uplink resource allocation request' based on the information received in step S810 (e.g. a preamble index, a specific signal sequence (e.g. sequence, signature) for uplink resource request, a specific field value of a uplink control channel). In such cases, uplink radio resource allocation information may be transmitted in step S830. Alternatively, the RA MSG2 may be transmitted through a PDCCH or a physical downlink shared channel (PDSCH).

In step S830, the base station may transmit only a PDCCH (e.g. DCI) without transmitting an RA response message (e.g. RA MSG2) through a PDSCH. In this case, the DCI may include one or more of uplink resource allocation information (e.g. scheduling information), transmission timing adjustment information (e.g. timing advance (TA) value, TA command), transmission power control information, backoff information, beam configuration information, TCI state information, configured scheduled (CS) state information, state transition information, PUCCH configuration information, an index of the RA MSG1 received in step S820 (e.g. preamble index), and uplink resource allocation information for RA MSG3 transmission in step S840.

Here, the beam configuration information may indicate activation or deactivation of a specific beam. The TCI state information may indicate activation or deactivation of a specific TCI state. The CS state information may indicate activation or deactivation of radio resources allocated using the CS scheme. The state transition information may indicate a transition of the terminal's operating state. The state transition information may indicate a transition from a specific operating state to a radio resource control (RRC) idle state, an RRC connected state, or an RRC inactive state. Alternatively, the state transition information may indicate maintaining the current operating state. The PUCCH configuration information may include allocation information for scheduling request (SR) resources. Alternatively, the PUCCH configuration information may indicate activation or deactivation of SR resource(s).

If the base station transmits only the PDCCH (e.g. DCI) in step S830 without the RA MSG2, the terminal may recognize absence of the RA MSG2 transmitted through a PDSCH by using control information included in the PDCCH, a DCI format included in the PDCCH, and/or a scheduling identifier used for transmission of the PDCCH. The base station may transmit scheduling information of the RA MSG2 to the terminal using the RA-RNTI. For example, CRC bits of DCI including the scheduling information of the RA MSG2 may be scrambled using the RA-RNTI, and the DCI may be transmitted through the PDCCH.

At this time, the terminal and the base station may generate the RA-RNTI using Equation 2.

$$\text{RA-RNTI} = 1 + s\_id + 14 \times t\_id + 14 \times 80 \times f\_id + 14 \times 80 \times 8 \times ul\_carrier\_id + 14 \times 80 \times 8 \times 2 \times pol\_id \qquad \text{[Equation 2]}$$

In Equation 2, $s\_id$ ($0 \leq s\_id < 14$) may indicate an index of the first symbol of the RO, and $t\_id$ ($0 \leq t\_id < 80$) may indicate an index of the first slot (e.g. starting slot) of the RO within a system frame. In exemplary embodiments, a symbol may refer to an OFDM symbol. $t\_id$ may be determined based on an SCS. $f\_id$ ($0 \leq f\_id < 8$) may indicate an index of the RO in the frequency domain, and $ul\_carrier\_id$ may indicate a UL carrier on which the PRACH preamble is transmitted. If the UL carrier on which the PRACH preamble is transmitted is an NUL, $ul\_carrier\_id$ may be set to 0. If the UL carrier on which the PRACH preamble is transmitted is an SUL, $ul\_carrier\_id$ may be set to 1. $pol\_id$ may be configured as a polarization identifier (ID) and may be utilized similarly to $carrier\_id$. For example, if the polarization is LP, $pol\_id$ may be 0. If the polarization is CP, $pol\_id$ may be 1.

Meanwhile, the terminal may receive the RA MSG2 from the base station. At this time, the terminal may generate the RA-RNTI using Equation 2. The terminal may then use the generated RA-RNTI to descramble the RA MSG2 and decode the DCI, and generate an RA MSG3 (i.e. message 3) including information on the terminal itself (i.e. terminal information), which may then be transmitted to the base station (S840). The terminal information may include one or more of a terminal identifier, capability, attributes, mobility state, or location information of the terminal, a reason for radio access, uplink data size information (e.g. buffer status report (BSR)), connection configuration request information, or uplink data. Additionally, in step S840, the terminal may transmit information requesting necessary information for the terminal to the base station.

Furthermore, using the RA MSG3, the terminal may transmit one or more of beam failure recovery request information, BWP change request information, BWP deactivation/activation request information, measurement result information for the base station (or cell) in a carrier aggregation (CA) environment, and a request for CA activation/-deactivation. The beam failure recovery request information may request execution of a beam recovery procedure based on beam measurement results when a random access procedure for beam recovery is performed after beam failure detection. In this case, the terminal may transmit beam-specific measurement result information and/or TCI state information for configuration of a new beam to the base station.

The 'BWP change request information' or 'BWP deactivation/activation request information" may each include one or more of 'request information for changing the active BWP based on measurement results for BWPs', 'measurement result information for inactive BWPs', and 'preferred active BWP information of the terminal'. Additionally, the RA MSG3 may include one or more of a BWP identifier, a base station (or cell) identifier, and configured beam information (e.g. TCI state, CSI-RS index, SS/PBCH index, which can be used to identify a beam). The RA MSG3 may be transmitted in form of a MAC CE or an RRC message.

If the RA MSG2 is received based on the PDCCH (or DCI) in step S830, the terminal may perform operations according to information elements included in the PDCCH (or DCI). The information elements included in the PDCCH (or DCI) may include one or more of 'request information for transitioning the terminal's operating state'. 'request information for maintaining the terminal's operating state', 'information indicating activation or deactivation of a beam', 'information indicating activation or deactivation of a TCI state', and 'information indicating activation or deactivation of a CS state'. In this case, the random access procedure may be terminated without performing step S840.

In step S830, the RA MSG2 may be received based on the PDCCH or DCI, and if an uplink radio resource for RA MSG3 is not allocated, the terminal may wait until allocation information of the uplink radio resource for RA MSG3 is received. If the allocation information of the uplink radio resource for RA MSG3 is received before a preconfigured timer expires, the terminal may transmit an RA MSG3 to the base station using the uplink radio resource. On the other hand, if the allocation information of the uplink radio resource for RA MSG3 is not received until the preconfigured timer expires, the terminal may perform a random access procedure again. In other words, the terminal may perform step S820 again.

In step S850, the base station may transmit downlink information requested by the terminal. Alternatively, the base station may transmit downlink data or a control message to the terminal. In step S850, the base station may transmit the terminal identifier received from the terminal (e.g. the terminal identifier received in step S840) to the terminal. A message 4 transmitted by the base station in step S850 may be referred to as 'RA MSG4'. The base station may transmit resource allocation information (e.g. scheduling information) for transmitting the RA MSG3 to the terminal using the RA MSG2. The scheduling information may include at least one of an identifier of the base station transmitting the scheduling information, a beam index, an identifier for distinguishing the scheduling information, resource allocation information, MCS information, and resource allocation information for transmitting feedback information indicating whether the scheduling information is received (e.g. ACK or NACK). The resource allocation information may include frequency domain resource allocation information (e.g. transmission bandwidth information and subcarrier allocation information) and/or time domain resource allocation information (e.g. frame index, subframe index, slot index, symbol index, transmission section, and transmission timing).

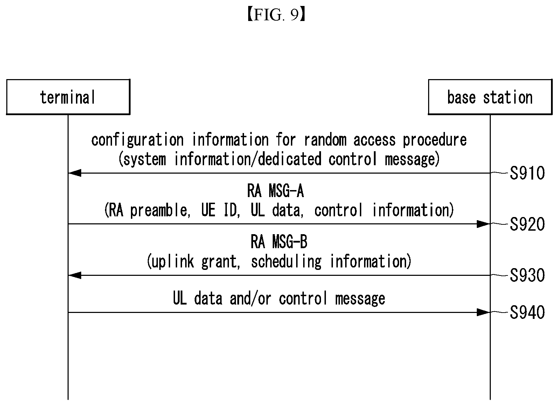

FIG. 9 is a sequence chart illustrating a second exemplary embodiment of a method for performing a random access procedure in a non-terrestrial network.

As shown in FIG. 9, a base station may transmit system information and/or a control message including RACH configuration information to a terminal (S910). Here, the system information may be common system information used by multiple base stations or base station-specific system information (e.g. cell-specific system information). The control message may be a dedicated control message.

The system information may be configured for each base station, each beam group, or each beam. The system information may include RACH configuration information. The RACH configuration information may include information (i.e. polarization information) on a polarization to be used by the terminal to transmit a preamble. Here, the polarization information may include types of polarization available for use by the terminal. The types of polarization may include left-hand circular polarization, right-hand circular polarization, and linear polarization. The polarization information may include information on a polarization pattern (i.e. polarization pattern information). Details related to the polarization pattern information are described with reference to FIG. 10. Additionally, the polarization information may include information on a group of preamble sequences transmittable using left-hand circular polarization, a group of preamble sequences transmittable using right-hand circular polarization, and a group of preamble sequences transmittable using linear polarization.

Additionally, the RACH configuration information may include at least one of information on a transmission frequency of a physical layer, information on a system bandwidth, information on a subcarrier spacing, configuration information of beam(s) (e.g. beam width and beam index) according to a beamforming technique, variable configuration information of radio resources in the frequency and/or time domain (e.g. reference value, offset, etc. of the radio resources), or information on inactive (or unused) radio resource region(s)/period(s). Furthermore, the RACH configuration information may include preamble information indicating available preambles.

Accordingly, the terminal may receive the system information and/or control message from the base station. The terminal may identify available types of polarization and preambles. Subsequently, the terminal may select one polarization from the available types of polarization and select one preamble. The terminal may transmit an RA MSG-A, which includes the selected preamble, to the base station using the selected polarization by utilizing a radio resource configured by the base station (S920). The RA MSG-A may include the RA preamble and a terminal identifier (e.g. user equipment (UE) ID or cell-RNTI (C-RNTI)). Additionally, the RA MSG-A may further include uplink data and/or control information. In a two-step random access procedure, the message 1 may be referred to as 'RA MSG-A', and the RA MSG-A may be distinguished from the RA MSG1 in the four-step random access procedure.

The RA MSG-A may include the RA preamble and an RA payload. In the two-step random access procedure, the RA preamble may be referred to as 'two-step RA preamble', and the RA payload may be referred to as 'two-step RA payload'. The RA preamble of RA MSG-A may be selected by a MAC layer of the terminal. The RA payload of RA MSG-A may be generated by the MAC layer or an RRC layer. The RA preamble selected by the MAC layer of the terminal and the RA payload generated by the MAC layer or the RRC layer of the terminal may be delivered to the physical layer. The RA payload of RA MSG-A may include at least one of a terminal identifier (e.g. UE ID or C-RNTI), uplink data, and control information. The control information may include at least one of BSR, measurement result information (e.g. quality information), BFR request information, RLF report information, request information for RRC connection setup, request information for RRC connection reestablishment, resume request information, location information of the terminal (e.g. location estimated using GPS signals, positioning measurement scheme, or embedded sensor(s)), or request information for system information transfer. When the CBRA procedure or CFRA procedure is performed, the RA payload may include the terminal identifier. The uplink radio resource for transmitting the RA preamble may be configured independently of the uplink radio resource for transmitting the RA payload.

To configure the transmission resource for the RA preamble of RA MSG-A differently from the transmission resource for the RA payload of RA MSG-A, the uplink radio resource for transmitting the RA payload of RA MSG-A (e.g. PUSCH configured for transmitting the RA payload of RA MSG-A) may be configured to correspond to the RA preamble of RA MSG-A. In other words, a mapping relationship may be established between the uplink radio resource for transmitting the RA preamble of RA MSG-A and the uplink radio resource for transmitting the RA payload of RA MSG-A.

The base station may receive the RA MSG-A from the terminal and obtain the RA preamble and RA payload included in the RA MSG-A. Additionally, the base station may obtain information on the type of polarization used by the terminal. Moreover, the base station may obtain at least one of the terminal identifier, uplink data, and control information from the RA payload. The base station may generate an RA MSG-B (e.g. message 2 or RAR) in response to the RA MSG-A and transmit the RA MSG-B to the terminal (S930). The terminal may receive the RA MSG-B from the base station and identify information element(s) included in the RA MSG-B. The RA MSG-B may include at least one of a backoff indicator (BI), uplink radio resource allocation information, information on the RA preamble of the RA MSG-A (e.g. RA preamble index), transmission timing adjustment information (e.g. TA value or TA command), a scheduling identifier (e.g. C-RNTI or temporary cell (TC)-RNTI), or a terminal identifier for contention resolution (e.g. UE contention resolution ID).

When the RA MSG-B is scheduled by a C-RNTI allocated to the terminal, or when the RA MSG-B includes the terminal identifier (e.g. UE contention resolution ID) contained in the RA MSG-A, the terminal may determine that contention has been resolved. In other words, the terminal may determine that the two-step random access procedure has been completed.

When CRC bits of DCI containing scheduling information for a PDSCH carrying the RA MSG-B (e.g. RAR for the RA MSG-A) is scrambled by the C-RNTI, and the RA MSG-B including TA information and/or UL grant is received within an RAR window (or before a timer expires), the terminal may determine that contention in the two-step random access procedure has been resolved. Here, the TA information may be a TA value or a TA command. A specific field (or bits) within the PDCCH (e.g. DCI or UCI) may indicate that the RA MSG-B scheduled by the corresponding PDCCH is the RA MSG-B scheduled by the C-RNTI. Alternatively, a field in a MAC subheader or a logical channel identifier (LCID) for transmission of a MAC CE for the RA MSG-B may indicate that the RA MSG-B scheduled by the PDCCH is the RA MSG-B scheduled by the C-RNTI.

In the four-step random access procedure, the RAR window may start from a transmission completion time of the RA MSG1. In the two-step random access procedure, the RAR window may start from a transmission completion time of the RA payload of the RA MSG-A. If the RA MSG-B (e.g. RA MSG-B scheduled by the C-RNTI) including TA information and/or UL grant is not received within the RAR window (or before a timer expires), the terminal may determine that contention in the two-step random access procedure has not been resolved. If the RA MSG-B scheduled by the C-RNTI is transmitted in response to the RA MSG-A in the two-step random access procedure, the PDCCH (e.g. DCI or UCI) may include TA information, an indicator indicating that the corresponding PDCCH contains scheduling information in response to the RA MSG-A, and the like. The RA MSG-B may be transmitted in form of a MAC message (e.g. MAC CE) or an RRC message. If the RA MSG-B is transmitted in form of a MAC message, the RRC layer of the base station that has obtained the information of the RA MSG-A may deliver parameter(s) to be included in the RA MSG-B to the MAC layer of the base station, and the MAC layer of the base station may generate the RA MSG-B in form of a MAC CE. The RA MSG-B may include the terminal identifier obtained through the RA payload of RA MSG-A.

In step S930, the base station may transmit a PDCCH scheduling an uplink radio resource, a PDCCH (e.g. DCI) for RAR (e.g. RA MSG-B), or RA MSG-B. The RA MSG-B may be transmitted through a PDSCH. If only the PDCCH is transmitted in step S930, the PDCCH may include one or more of allocation information (e.g. scheduling information) of an uplink radio resource for the terminal, transmission timing adjustment information (e.g. TA information), transmission power control information, backoff information, beam configuration information, TCI state information, CS state information, state transition information, PUCCH configuration information, an index of the RA preamble included in the RA MSG-A, or allocation information of a radio resource for transmission of the RA payload in the RA MSG-A.

Additionally, if only the PDCCH is transmitted in step S930, the terminal may recognize that the RA MSG2 delivered based on the PDSCH is not present based on a DCI format of the PDCCH and/or the aforementioned PDCCH configuration information. The beam configuration information may indicate activation or deactivation of a specific beam. The TCI state information may indicate activation or deactivation of a specific TCI state. The CS state information may indicate activation or deactivation of radio resources allocated through the CS scheme. The state transition information may indicate a transition from the current operating state to an RRC idle state, an RRC inactive state, or an RRC connected state. Alternatively, the state transition information may indicate maintaining the current operating state. The PUCCH configuration information may be allocation information of SR transmission resource(s). Alternatively, the PUCCH configuration information may indicate activation or deactivation of SR transmission resource(s).

By transmitting only the PDCCH, the base station may transmit the aforementioned control information in step S930 through a PDSCH. The control message transmitted through a PDSCH may include one or more of allocation information (e.g. scheduling information) of an uplink radio resource, transmission timing adjustment information (e.g. TA information), transmission power control information, backoff information, beam configuration information, TCI state information, configured scheduled (CS) state information, state transition information, PUCCH configuration information, an index of the RA preamble included in the RA MSG-A, or allocation information of an uplink radio resource for transmission of uplink data and/or control message in step S940.

In the procedure of generating/transmitting the RA MSG-B, the base station may transmit DCI including scheduling information for the transmission of the RA MSG-B using an RA-RNTI or a scheduling identifier allocated to the terminal (e.g. C-RNTI). That is, CRC bits of the DCI may be scrambled by the RA-RNTI or C-RNTI. The base station may transmit the RA MSG-B to the terminal using a PDSCH indicated by the DCI.

If the terminal successfully receives the RA MSG-B from the base station, the two-step random access procedure may be terminated. The terminal receiving the RA MSG-B may transmit uplink data and/or a control message to the base station (S940) using the uplink scheduling information (e.g. scheduling information included in RA MSG-B).

FIG. 10 is a conceptual diagram illustrating a first exemplary embodiment of a process for transmitting a preamble using a polarization pattern in FIG. 8 and FIG. 9.

As shown in FIG. 10, a satellite base station 1010 may transmit system information and/or a control message, including RACH configuration information, to terminals 1020A to 1020D. Here, the system information may be common system information used by multiple satellite base stations or satellite base station-specific system information (e.g. cell-specific system information). The control message may be a dedicated control message. The system information may be configured for each satellite base station, each beam group, or each beam. The system information may include the RACH configuration information. The RACH configuration information may include information on polarization patterns to be used by the terminals 1020A to 1020D to repeatedly transmit a preamble. Here, the polarization pattern information may be information on an order of polarization types to be used when the terminal repeatedly transmits the preamble. In this case, the polarization types may include left-hand circular polarization (LHCP) and right-hand circular polarization (RHCP). Moreover, the information on the order of polarization types may represent the order in which the polarization types are used by the terminal when repeatedly transmitting the preamble. Examples of such orders may include 'R-R-R-L', 'R-R-L-R', 'R-L-R-R', and 'L-R-R-R'. Here, 'R' may indicate right-hand circular polarization, and 'L' may indicate left-hand circular polarization. Additionally, the polarization types may include vertical polarization and horizontal polarization. Then, the information on the order of polarization types may indicate the order in which the polarization types are by the terminal when repeatedly transmitting the preamble, with examples including 'V-V-V-H', 'V-V-H-V', 'V-H-V-V', and 'H-V-V-V'. Here, 'V' may indicate vertical polarization, and 'H' may indicate horizontal polarization.

Additionally, the RACH configuration information may include one or more of information on a transmission frequency of a physical layer, information on a system bandwidth, information on a subcarrier spacing, configuration information of beam(s) (e.g. beamwidth, beam index) according to a beamforming technique, variable configuration information of radio resources in the frequency and/or time domain (e.g. reference value, offset, etc. of the radio resources), and information on inactive (or unused) radio resource region(s)/period(s). Moreover, the RACH configuration information may include preamble information indicating available preambles.

Each of the terminals 1020A to 1020D may repeatedly transmit a preamble using RHCP or LHCP. In this case, the satellite base station 1010 may have a separate receiver for each polarization. Alternatively, the satellite base station 1010 may process both polarizations using a single receiver. Each of the terminals 1020A to 1020D may repeatedly transmit a preamble, for example, four times using RHCP or LHCP. In this case, each of the terminals 1020A to 1020D may use a different preamble sequence. In such a case, the satellite base station 1010 may distinguish each of the terminals 1020A to 1020D based on the preamble sequence. Alternatively, the terminals 1020A to 1020D may repeatedly transmit the preamble using the same preamble sequence. In such a case, the satellite base station 1010 may further distinguish and identify the terminals 1020A to 1020D based on the polarization pattern used.

For example, the satellite base station 1010 may include information on a polarization pattern 'R-R-R-L' to be used in RACH configuration information and transmit the RACH configuration information to the first terminal 1020A. Then, the first terminal 1020A may receive the RACH configuration information including information on the polarization pattern 'R-R-R-L' to be used from the satellite base station 1010. Additionally, the satellite base station 1010 may include information on a polarization pattern 'R-R-L-R' in RACH configuration information and transmit the RACH configuration information to the second terminal 1020B. Then, the second terminal 1020B may receive the RACH configuration information including information on the polarization pattern 'R-R-L-R' from the satellite base station 1010. Furthermore, the satellite base station 1010 may include information on a polarization pattern 'R-L-R-R' in RACH configuration information and transmit the RACH configuration information to the third terminal 1020C. Then, the third terminal 1020C may receive the RACH configuration information including information on the polarization pattern 'R-L-R-R' from the satellite base station 1010. Additionally, the satellite base station 1010 may include information on a polarization pattern 'L-R-R-R' in RACH configuration information and transmit the RACH configuration information to the fourth terminal 1020D. Then, the fourth terminal 1020D may receive the RACH configuration information including information on the polarization pattern 'L-R-R-R' from the satellite base station 1010.

Accordingly, the first terminal 1020A may repeatedly transmit a preamble four times, applying polarizations in the order of RHCP-RHCP-RHCP-LHCP. The second terminal 1020B may repeatedly transmit a preamble four times, applying polarization in the order of RHCP-RHCP-LHCP-RHCP. The third terminal 1020C may repeatedly transmit a preamble four times, applying polarization in the order of RHCP-LHCP-RHCP-RHCP. The fourth terminal 1020D may repeatedly transmit a preamble four times, applying polarization in the order of LHCP-RHCP-RHCP-RHCP.

As described above, each of the terminals 1020A to 1020D may repeatedly transmit a preamble to the satellite base station 1010 based on the information on the polarization pattern received from the satellite base station 1010. Then, the satellite base station 1010 may receive the preamble repeatedly from the terminal and identify the used polarization pattern applied during preamble transmissions. In such a case, the satellite base station 1010 may distinguish the transmitting terminal based on the identified polarization pattern, as shown in Table 7.

[Table 7]

| Cases where only one terminal transmits | R L | R L | R L | R L | Determination result |
|---|---|---|---|---|---|
| A case where only the first terminal 1020A transmits | X 0 | X 0 | X 0 | 0 X | first terminal 1020A |
| A case where only the second terminal 1020B transmits | X 0 | X 0 | 0 X | X 0 | second terminal 1020B |
| A case where only the third terminal 1020C transmits | X 0 | 0 X | X 0 | X 0 | third terminal 1020C |
| A case where only the fourth terminal 1020D transmits | 0 X | X 0 | X 0 | X 0 | fourth terminal 1020D |

In Table 7, 'x' may indicate a case where a receiver responsible for each polarization in the satellite base station 1010 detects a signal transmitted with the corresponding polarization at a reception strength P equal to or greater than a predetermined threshold P_TH. On the other hand, '0' in Table 7 may indicate a case where a receiver responsible for each polarization in the satellite base station 1010 does not detect a signal transmitted with the corresponding polarization at a reception strength equal to or greater than the predetermined threshold. In this case, the satellite base station 1010 may ignore noises N and a polarization mismatch for operational simplification. In order for the satellite base station 1010 to receive an RACH preamble, P may need to be greater than P_TH (P>P_TH). In the section marked with 'x' in Table 7, N < P < P_TH may apply. The satellite base station 1010 may have difficulty avoiding both mis-detection and false detection conditions by receiving only a single preamble. The satellite base station 1010 may improve reception performance by combining multiple received preambles. In this case, P obtained by the combining may be greater than P_TH.

Meanwhile, two terminals among the terminals 1020A to 1020D may repeatedly transmit the preambles to the satellite base station 1010 based on the polarization pattern information received from the satellite base station 1010. Then, the satellite base station 1010 may receive the preambles repeatedly from the two terminals and identify the polarization patterns applied during preamble transmissions. In such a case, the satellite base station 1010 may distinguish the transmitting terminals based on the identified polarization patterns, as shown in Table 8.

[Table 8]

| Cases where two terminals transmit | R L | R L | R L | R L | Determination result |
|---|---|---|---|---|---|
| A case where only the first terminal 1020A and the second terminal 1020B transmit | XX 0 | XX 0 | X X | X X | first terminal 1020A and second terminal 1020B |
| A case where only the first terminal 1020A and the third terminal 1020C transmit | XX 0 | X X | XX 0 | X X | first terminal 1020A and third terminal 1020C |
| A case where only the first terminal 1020A and the fourth terminal 1020D transmit | X X | XX 0 | XX 0 | X X | first terminal 1020A and fourth terminal 1020D |
| A case where only the second terminal 1020B and the third terminal 1020C transmit | XX 0 | X X | X X | XX 0 | second terminal 1020B and third terminal 1020C |
| A case where only the second terminal 1020B and the fourth terminal 1020D transmit | X X | XX 0 | X X | XX 0 | second terminal 1020B and fourth terminal 1020D |
| A case where only the third terminal 1020C and the fourth terminal 1020D transmit | X X | X X | XX 0 | XX 0 | third terminal 1020C and fourth terminal 1020D |

Meanwhile, three terminals among the terminals 1020A to 1020D may repeatedly transmit the preambles to the satellite base station 1010 based on the polarization pattern information received from the satellite base station 1010. Then, the satellite base station 1010 may receive the preambles repeatedly from the three terminals and identify the polarization patterns applied during preamble transmissions. In such a case, the satellite base station 1010 may distinguish the transmitting terminals based on the identified polarization patterns, as shown in Table 9.

[Table 9]

| Cases where three terminals transmit | R L | R L | R L | R L | Determination result |
|---|---|---|---|---|---|
| A case where the first terminal 1020A, the second terminal 1020B, and the third terminal 1020C transmit | XXX 0 | XX X | XX X | XX X | first terminal 1020A, second terminal 1020B, and third terminal 1020C |
| A case where the first terminal 1020A, the second terminal 1020B, and the fourth terminal 1020D transmit | XX X | XXX 0 | XX X | XX X | first terminal 1020A, second terminal 1020B, and fourth terminal 1020D |
| A case where the first terminal 1020A, the third terminal 1020C, and the fourth terminal 1020D transmit | XX X | XX X | XX 0 | XX X | first terminal 1020A, third terminal 1020C, and fourth terminal 1020D |
| A case where the second terminal 1020B, the third terminal 1020C, and the fourth terminal 1020D transmit | XX X | XX X | XX X | XXX 0 | second terminal 1020B, third terminal 1020C, and fourth terminal 1020D |

Meanwhile, the terminals 1020A to 1020D may repeatedly transmit the preambles to the satellite base station 1010 based on the polarization pattern information received from the satellite base station 1010. Then, the satellite base station 1010 may receive the preambles repeatedly from the four terminals and identify the polarization patterns applied during preamble transmissions. In such a case, the satellite base station 1010 may distinguish the transmitting terminals based on the identified polarization patterns, as shown in Table 10.

[Table 10]

| A case where four terminals transmit | R L | R L | R L | R L | Determination result |
|---|---|---|---|---|---|
| A case where the first terminal 1020A, the second terminal 1020B, the third terminal 1020C, and the fourth terminal 1020D transmit | XXX X | XXX X | XXX X | XXX X | first to fourth terminals 1020A to 1020D |

Therefore, in the proposed schemes, the terminals can repeatedly transmit the same preamble to the satellite base station by applying the polarization patterns. Accordingly, the satellite base station can receive the same preamble from an arbitrary number of terminals using different polarization patterns. As a result, the satellite base station can distinguish the terminals using the polarization patterns. In this case, the satellite base station can perform blind detection for all polarization patterns by utilizing the polarization patterns applied by the terminals. The satellite base station can determine that the preamble has been transmitted using the most likely polarization pattern. The above description is an example for a case where four terminals repeatedly transmit the preamble four times. This method can be easily extended and applied to different repetition counts and polarization patterns.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

## Claims

1. A method of a user equipment (UE), comprising:

   receiving, from a satellite, random access channel-related configuration information including polarization information indicating a polarization to be used for transmitting a preamble;
   determining a polarization to be used based on the polarization information;
   selecting a preamble sequence to be transmitted using the determined polarization; and
   transmitting the selected preamble sequence to a satellite using the determined polarization.

2. The method according to claim 1, wherein the polarization information includes information on a polarization type to be used for transmission of the preamble, the polarization type is at least one of left-handed circular polarization, right-handed circular polarization, or linear polarization, and the determining of the polarization to be used based on the polarization information comprises: determining the polarization to be used among the left-handed circular polarization, the right-handed circular polarization, or the linear polarization.

3. The method according to claim 1, wherein the polarization information includes information on polarization types and information on preamble sequences available for each polarization type, and in the determining of the polarization to be used based on the polarization information, the UE determines a polarization type to be used, and the selecting of the preamble sequence comprises: selecting the preamble sequence to be transmitted from preamble sequences available for the determined polarization type.

4. The method according to claim 1, wherein the polarization information includes polarization pattern information, the determining of the polarization to be used based on the polarization information comprises: determining an order of polarization types for repeatedly transmitting the preamble based on the polarization pattern information, and the transmitting of the selected preamble sequence to the satellite using the determined polarization comprises: repeatedly transmitting the selected preamble sequence to the satellite based on the determined order of the polarization types.

5. The method according to claim 1, further comprising:

   receiving, from the satellite, downlink control information (DCI) scrambled with a random access-radio network temporary identifier (RA-RNTI) based on the polarization information;
   generating the RA-RNTI based on the polarization information; and
   decoding the DCI using the RA-RNTI.

6. A method of a satellite, comprising:

   transmitting, to a user equipment (UE), random access channel-related configuration information including polarization information indicating a polarization to be used for transmitting a preamble;
   receiving, from the UE, a preamble transmitted using a polarization based on the polarization information; and
   transmitting a response signal for the received preamble to the UE.

7. The method according to claim 6, wherein the polarization information includes information on a polarization type to be used for transmission of the preamble, and the polarization type is at least one of left-handed circular polarization, right-handed circular polarization, or linear polarization.

8. The method according to claim 6, wherein the polarization information includes polarization pattern information, and the receiving of the preamble transmitted from the UE using the polarization based on the polarization information comprises: repeatedly receiving the preamble repeatedly transmitted based on the polarization pattern information from the UE.

9. The method according to claim 8, further comprising: identifying the UE based on the polarization pattern information.

10. The method according to claim 6, further comprising: generating an RA-RNTI based on the polarization information, wherein the transmitting of the response signal for the received preamble to the UE comprises:

    transmitting DCI scrambled with the RA-RNTI; and
    transmitting the response signal to the UE according to the DCI.

11. A user equipment (UE) comprising at least one processor, wherein the at least one processor causes the UE to perform:

    receiving, from a satellite, random access channel-related configuration information including polarization information indicating a polarization to be used for transmitting a preamble;
    determining a polarization to be used based on the polarization information;
    selecting a preamble sequence to be transmitted using the determined polarization; and
    transmitting the selected preamble sequence to a satellite using the determined polarization.

12. The UE according to claim 11, wherein the polarization information includes information on a polarization type to be used for transmission of the preamble, the polarization type is at least one of left-handed circular polarization, right-handed circular polarization, or linear polarization, and in the determining of the polarization to be used based on the polarization information, the at least one processor further causes the UE to perform: determining the polarization to be used among the left-handed circular polarization, the right-handed circular polarization, or the linear polarization.

13. The UE according to claim 11, wherein the polarization information includes polarization pattern information; in the determining of the polarization to be used based on the polarization information, the at least one processor further causes the LTE to perform: determining an order of polarization types for repeatedly transmitting the preamble based on the polarization pattern information; and in the transmitting of the selected preamble sequence to the satellite using the determined polarization, the at least one processor further causes the UE to perform: repeatedly transmitting the selected preamble sequence to the satellite based on the determined order of the polarization types.

14. The UE according to claim 11, wherein the at least one processor further causes the UE to perform:

receiving, from the satellite, downlink control information (DCI) scrambled with a random access-radio network temporary identifier (RA-RNTI) based on the polarization information;
generating the RA-RNTI based on the polarization information; and
decoding the DCI using the RA-RNTI.

【FIG. 1A】

【FIG. 1B】

NG-RAN or 6G-RAN

core network

data network

N6

NG or 6G

base station

NR Uu or 6G Uu

satellite

gateway

RRU

UE

【FIG. 2A】

【FIG. 2B】

[FIG. 2C]

EP 4 568 135 A1

【FIG. 3】

300

320

310

memory

ROM RAM

processor

input interface device

340

output interface device

350

370

storage device

360

transceiver

330

【FIG. 4】

【FIG. 5A】

【FIG. 5B】

EP 4 568 135 A1

【FIG. 6A】

34

[FIG. 6B]

UE | satellite | gateway | core network (AMF)

**UE**
- NAS
- RRC
- PDCP
- RLC
- MAC
- PHY

**base station**
| RRC | NGAP |
| PDCP | SCTP |
| RLC | IP |
| MAC | L2 |
| PHY | L1 |

**core network (AMF)**
- NAS
- NGAP
- SCTP
- IP
- L2
- L1

NR-Uu or 6G-Uu

NR-Uu or 6G-Uu

NG-C or 6G-C

⊠ : RF processing and frequency switching

【FIG. 7A】

**[FIG. 7B]**

EP 4 568 135 A1

core network

| UE | satellite | gateway | AMF | SMF |

base station

NAS-SM ———————————————————————— NAS-SM relay — NAS-SM

NAS-MM ———————————————————————— NAS-MM

RRC — RRC    NG-AP ———————————— NG-AP

PDCP — PDCP    SCTP ———————————— SCTP

RLC — RLC    IP — IP    IP — IP

N11 — N11    N6

Protocol Layers of the SRI

Protocol Layers of the SRI

MAC — MAC    L2 — L2

PHY — PHY    L1 — L1

NR-Uu or 6G-Uu

NG-C or 6G-C

【FIG. 8】

| terminal | | base station |
|---|---|---|

configuration information for random access procedure
(system information/dedicated control message)
◄──────────────────────────────  S810

RA MSG1 (RA preamble)
──────────────────────────────►  S820

RA MSG2 (RAR)
◄──────────────────────────────  S830

RA MSG3 (terminal information)
──────────────────────────────►  S840

RA MSG4
(data and/or control message)
◄──────────────────────────────  S850

【FIG. 9】

| terminal | | base station |

configuration information for random access procedure
(system information/dedicated control message)
S910

RA MSG-A
(RA preamble, UE ID, UL data, control information)
S920

RA MSG-B
(uplink grant, scheduling information)
S930

UL data and/or control message
S940

【FIG. 10】

## INTERNATIONAL SEARCH REPORT

| International application No. |
|---|
| **PCT/KR2023/017155** |

### A. CLASSIFICATION OF SUBJECT MATTER

**H04B 7/10**(2006.01)i; **H04W 74/08**(2009.01)i; **H04W 84/06**(2009.01)i

According to International Patent Classification (IPC) or to both national classification and IPC

### B. FIELDS SEARCHED

Minimum documentation searched (classification system followed by classification symbols)

H04B 7/10(2006.01); H04B 7/06(2006.01); H04B 7/185(2006.01); H04L 1/18(2006.01); H04W 24/08(2009.01); H04W 56/00(2009.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 위성(satellite), 프리앰블(preamble), 편파(polarization wave), 랜덤 액세스 채널 (random access channel)

### C. DOCUMENTS CONSIDERED TO BE RELEVANT

| Category* | Citation of document, with indication, where appropriate, of the relevant passages | Relevant to claim No. |
|---|---|---|
| Y | WO 2022-118295 A1 (LENOVO (SINGAPORE) PTE. LTD.) 09 June 2022 (2022-06-09) <br> See paragraphs [0079], [0088], [0090]-[0092], [0096] and [0126]. | 1-14 |
| Y | WO 2022-031004 A1 (LG ELECTRONICS INC.) 10 February 2022 (2022-02-10) <br> See paragraphs [0150], [0342], [0344], [0352] and [0355]; and figure 23. | 1-14 |
| Y | WO 2021-204171 A1 (HUAWEI TECHNOLOGIES CO., LTD. et al.) 14 October 2021 (2021-10-14) <br> See page 17, line 23 – page 18, line 28; and figure 3. | 5,10,14 |
| A | US 2022-0232503 A1 (FG INNOVATION COMPANY LIMITED) 21 July 2022 (2022-07-21) <br> See paragraphs [0239] and [0380]-[0382]. | 1-14 |
| A | WO 2022-079692 A1 (LENOVO (SINGAPORE) PTE. LTD.) 21 April 2022 (2022-04-21) <br> See paragraphs [0041]-[0187]; and figure 1A. | 1-14 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **15 February 2024** | **15 February 2024** |

| Name and mailing address of the ISA/KR | Authorized officer |
|---|---|
| **Korean Intellectual Property Office** <br> **Government Complex-Daejeon Building 4, 189 Cheongsa-** <br> **ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/017155**

| Patent document cited in search report | | | Publication date (day/month/year) | Patent family member(s) | | | Publication date (day/month/year) |
|---|---|---|---|---|---|---|---|
| WO | 2022-118295 | A1 | 09 June 2022 | CN | 116547916 | A | 04 August 2023 |
| | | | | CN | 116671031 | A | 29 August 2023 |
| | | | | EP | 4256722 | A1 | 11 October 2023 |
| | | | | EP | 4256723 | A1 | 11 October 2023 |
| | | | | WO | 2022-118293 | A1 | 09 June 2022 |
| WO | 2022-031004 | A1 | 10 February 2022 | KR | 10-2023-0048061 | A | 10 April 2023 |
| | | | | US | 2023-0284277 | A1 | 07 September 2023 |
| WO | 2021-204171 | A1 | 14 October 2021 | CN | 111363241 | A | 03 July 2020 |
| | | | | CN | 112512095 | A | 16 March 2021 |
| | | | | CN | 113509899 | A | 19 October 2021 |
| | | | | CN | 113511110 | A | 19 October 2021 |
| | | | | CN | 113511110 | B | 14 October 2022 |
| | | | | CN | 113516524 | A | 19 October 2021 |
| | | | | CN | 113517862 | A | 19 October 2021 |
| | | | | CN | 113517974 | A | 19 October 2021 |
| | | | | CN | 113517974 | B | 28 March 2023 |
| | | | | CN | 113518387 | A | 19 October 2021 |
| | | | | CN | 113518387 | B | 21 July 2023 |
| | | | | CN | 113518392 | A | 19 October 2021 |
| | | | | CN | 113518413 | A | 19 October 2021 |
| | | | | CN | 113518445 | A | 19 October 2021 |
| | | | | CN | 113518472 | A | 19 October 2021 |
| | | | | CN | 113518472 | B | 11 July 2023 |
| | | | | EP | 4117220 | A1 | 11 January 2023 |
| | | | | EP | 4117348 | A1 | 11 January 2023 |
| | | | | EP | 4120561 | A1 | 18 January 2023 |
| | | | | EP | 4120604 | A1 | 18 January 2023 |
| | | | | EP | 4120731 | A1 | 18 January 2023 |
| | | | | EP | 4120734 | A1 | 18 January 2023 |
| | | | | EP | 4124135 | A1 | 25 January 2023 |
| | | | | EP | 4129752 | A1 | 08 February 2023 |
| | | | | EP | 4134898 | A1 | 15 February 2023 |
| | | | | EP | 4135408 | A1 | 15 February 2023 |
| | | | | KR | 10-2022-0160648 | A | 06 December 2022 |
| | | | | US | 2023-0023698 | A1 | 26 January 2023 |
| | | | | US | 2023-0043279 | A1 | 09 February 2023 |
| | | | | US | 2023-0043937 | A1 | 09 February 2023 |
| | | | | US | 2023-0074712 | A1 | 09 March 2023 |
| | | | | US | 2023-0079149 | A1 | 16 March 2023 |
| | | | | US | 2023-0124820 | A1 | 20 April 2023 |
| | | | | US | 2023-0139991 | A1 | 04 May 2023 |
| | | | | US | 2023-0149879 | A1 | 18 May 2023 |
| | | | | US | 2023-0149988 | A1 | 18 May 2023 |
| | | | | WO | 2021-203666 | A1 | 14 October 2021 |
| | | | | WO | 2021-203781 | A1 | 14 October 2021 |
| | | | | WO | 2021-203994 | A1 | 14 October 2021 |
| | | | | WO | 2021-204004 | A1 | 14 October 2021 |
| | | | | WO | 2021-204039 | A1 | 14 October 2021 |
| | | | | WO | 2021-204065 | A1 | 14 October 2021 |
| | | | | WO | 2021-204094 | A1 | 14 October 2021 |

Form PCT/ISA/210 (patent family annex) (July 2022)

**INTERNATIONAL SEARCH REPORT**
Information on patent family members

International application No.

**PCT/KR2023/017155**

| Patent document cited in search report | | | Publication date (day/month/year) | Patent family member(s) | | | Publication date (day/month/year) |
|---|---|---|---|---|---|---|---|
| | | | | WO | 2021-204132 | A1 | 14 October 2021 |
| | | | | WO | 2021-204164 | A1 | 14 October 2021 |
| | | | | WO | 2021-204207 | A1 | 14 October 2021 |
| | | | | WO | 2021-204209 | A1 | 14 October 2021 |
| | | | | WO | 2021-204230 | A1 | 14 October 2021 |
| | | | | WO | 2021-204260 | A1 | 14 October 2021 |
| | | | | WO | 2021-204261 | A1 | 14 October 2021 |
| | | | | WO | 2021-204262 | A1 | 14 October 2021 |
| | | | | WO | 2021-204277 | A1 | 14 October 2021 |
| | | | | WO | 2021-204280 | A1 | 14 October 2021 |
| US | 2022-0232503 | A1 | 21 July 2022 | WO | 2022-152181 | A1 | 21 July 2022 |
| WO | 2022-079692 | A1 | 21 April 2022 | AU | 2021-359327 | A1 | 27 April 2023 |
| | | | | CN | 116420321 | A | 11 July 2023 |
| | | | | EP | 4229781 | A1 | 23 August 2023 |
| | | | | KR | 10-2023-0088710 | A | 20 June 2023 |
| | | | | US | 2023-0397247 | A1 | 07 December 2023 |

Form PCT/ISA/210 (patent family annex) (July 2022)